# EUROPEAN PATENT APPLICATION

(11) **EP 2 843 887 A1**
(43) Date of publication of application: **04.03.2015**
(21) Application number: 13781380.4
(22) Date of filing: 18.03.2013
(51) Int. Cl.: H04L 12/713, H04L 12/66, H04L 12/717, H04W 24/04, H04W 92/02

(54) **COMMUNICATION SYSTEM, AND PATH CONTROL METHOD**

(30) Priority: 27.04.2012 JP 2012102741
(71) Applicant: NEC Corporation, Tokyo 108-8001 (JP)
(72) Inventor: TAMURA, Toshiyuki, Tokyo 108-8001 (JP); SCHMID, Stefan, 69115 Heidelberg (DE)
(74) Representative: MacDougall, Alan John Shaw
(86) International application number: PCT/JP2013/001842
(87) International publication number: WO 2013/161172

(57) **Abstract**

An object is to provide a communication system that can avoid a service interruption caused by a device failure, a congestion and the like inside a cell phone system. The communication system according to the present invention includes a data transfer apparatus (11), a gateway (12) for communicating with the data transfer apparatus (11), a gateway (13) that is an alternative apparatus of the gateway (12), and a path control apparatus (14) for controlling a communication path between the data transfer apparatus (11) and the gateways (12) and (13). When the path control apparatus detects a failure condition in the gateway (12), the path control apparatus controls the data transfer apparatus (11) to transfer data that is transferred from the data transfer apparatus (11) to the gateway (12) to the gateway (13) and also notifies the gateway (13) of session information that is set to the gateway (12).

## Description

### Technical Field

The present invention relates to a communication system, and in particular, to a communication system that performs path control at the time of a failure.

### Background Art

In recent years, server integration (a virtual server) utilizing virtualization technology and clouding has been rapidly developed. Therefore, an increase in the size of a storage apparatus and a movement of resources between storage apparatuses has been proceeded. However, an operation of a network for connecting between a communication terminal used by a user and a virtual server still requires advanced knowledge, techniques and the like. Accordingly, development of an apparatus that can simplify the operation of the network has been desired.

Thus, as one of the techniques for simplifying the operation of the network, OpenFlow has been under investigation. The OpenFlow is a technique, the standard specification of which is formulated by the OpenFlow consortium. In a network using the OpenFlow, central control on the network using an OpenFlow controller simplifies the operation of the network. Further, in the network using the OpenFlow, path control by the unit of flow can realize flexible routing, thereby improving fault tolerance.

Patent Literature 1 discloses a configuration of a computer system that uses the OpenFlow composed of a switch group for data transfer and a controller that sets a flow table holding information such as a protocol type, a port number and the like to the switch group.

### Citation List

### Patent Literature

Patent Literature 1: Japanese Unexamined Patent Application Publication No. 2011-160363

### Summary of Invention

### Technical Problem

In the current cell phone system specified by the 3GPP standardization organization or the like, common IP network technology is applied to cell phone packet networks, and data communication services are provided to cell phone users. Further, the cell phone system is currently recognized as a part of a social infrastructure and is strongly requested to provide stable services. Therefore, by introducing the network technology for performing path control by the unit of flow into the current cell phone system, it may be possible to consider that a service interruption caused by a device failure, a congestion and the like inside the cell phone system is avoided. However, as the method for introducing the network technology for performing path control by the unit of flow into the cell phone system has not been explicitly investigated, it has been requested to clarify the configuration of the cell phone system using the network technology for performing path control by the unit of flow.

The present invention is made to solve such a problem, and an object of the present invention is to provide a communication system and a method for path control that can avoid a service interruption caused by a device failure, a device congestion, a device addition, a device deletion, a device maintenance and the like inside the communication system.

### Solution to Problem

A first exemplary aspect of the present invention is a communication system that includes: a data transfer apparatus; a first gateway for communicating with the data transfer apparatus; a second gateway that is an apparatus alternative to the first gateway; and path control means for controlling communication paths between the data transfer apparatus and the first and second gateways. When the path control means detects a failure condition in the first gateway, the path control means transfers data transferred from the data transfer apparatus to the first gateway to the second gateway and notifies the second gateway of session information that is set to the first gateway.

A second exemplary aspect of the present invention is a method for path control that includes: detecting a failure condition in a first gateway, in which the first gateway communicates with a data transfer apparatus; and transferring data to be transferred from the data transfer apparatus to the first gateway to a second gateway, and notifying the second gateway of session information, in which the second gateway is an apparatus alternative to the first gateway, and the session information is set to the first gateway.

### Advantageous Effects of Invention

According to the present invention, it is possible to provide a communication system and a method for path control that can avoid a service interruption caused by a device failure, a device congestion, a device addition, a device deletion, a device maintenance and the like inside a communication system.

### Brief Description of Drawings

Fig. 1 is a block diagram showing a communication system according to a first exemplary embodiment;
Fig. 2 is a diagram showing a failure that occurred in the communication system according to the first exemplary embodiment;
Fig. 3 is a diagram for explaining a routing table according to the first exemplary embodiment;
Fig. 4 is a diagram showing a failure that occurred in the communication system according to the first exemplary embodiment;
Fig. 5 is a diagram showing a failure that occurred in the communication system according to the first exemplary embodiment;
Fig. 6 is a diagram showing a failure that occurred in the communication system according to the first exemplary embodiment;
Fig. 7 is a sequence regarding bearer setting processing according to the first exemplary embodiment;
Fig. 8 is a sequence regarding bearer setting processing according to the first exemplary embodiment;
Fig. 9 is a sequence regarding a failure that occurred in the communication system according to the first exemplary embodiment;
Fig. 10 is a sequence regarding a failure that occurred in the communication system according to the first exemplary embodiment;
Fig. 11 is a sequence regarding a failure recovery in the communication system according to the first exemplary embodiment;
Fig. 12 is a sequence regarding a failure recovery in the communication system according to the first exemplary embodiment;
Fig. 13 is a sequence regarding a failure recovery in the communication system according to the first exemplary embodiment;
Fig. 14 is a diagram showing a congestion that occurred in a communication system according to a second exemplary embodiment;
Fig. 15 is a diagram for explaining a routing table according to the second exemplary embodiment;
Fig. 16 is a sequence regarding a congestion that occurred in the communication system according to the second exemplary embodiment;
Fig. 17 is a sequence regarding a congestion that occurred in the communication system according to the second exemplary embodiment;
Fig. 18 is a sequence regarding a congestion that occurred in the communication system according to the second exemplary embodiment;
Fig. 19 is a sequence regarding a congestion that occurred in the communication system according to the second exemplary embodiment;
Fig. 20 is a sequence regarding a congestion that occurred in the communication system according to the second exemplary embodiment;
Fig. 21 is a sequence regarding a congestion that occurred in the communication system according to the second exemplary embodiment;
Fig. 22 is a sequence regarding a congestion recovery in the communication system according to the second exemplary embodiment;
Fig. 23 is a sequence regarding a congestion recovery in the communication system according to the second exemplary embodiment;
Fig. 24 is a sequence regarding a congestion recovery in the communication system according to the second exemplary embodiment;
Fig. 25 is a diagram showing a failure that occurred in a communication system according to a third exemplary embodiment;
Fig. 26 is a diagram showing a failure that occurred in the communication system according to the third exemplary embodiment;
Fig. 27 is a diagram showing a failure that occurred in the communication system according to the third exemplary embodiment;
Fig. 28 is a sequence regarding a failure that occurred in the communication system according to the third exemplary embodiment;
Fig. 29 is a sequence regarding a failure that occurred in the communication system according to the third exemplary embodiment;
Fig. 30 is a sequence regarding a failure recovery in the communication system according to the third exemplary embodiment;
Fig. 31 is a sequence regarding a failure recovery in the communication system according to the third exemplary embodiment;
Fig. 32 is a sequence regarding a failure recovery in the communication system according to the third exemplary embodiment;
Fig. 33 is a diagram showing a congestion that occurred in a communication system according to a fourth exemplary embodiment;
Fig. 34 is a sequence regarding a congestion that occurred in the communication system according to the fourth exemplary embodiment;
Fig. 35 is a sequence regarding a congestion that occurred in the communication system according to the fourth exemplary embodiment;
Fig. 36 is a sequence regarding a congestion that occurred in the communication system according to the fourth exemplary embodiment;
Fig. 37 is a sequence regarding a congestion that occurred in the communication system according to the fourth exemplary embodiment;
Fig. 38 is a sequence regarding a congestion that occurred in the communication system according to the fourth exemplary embodiment;
Fig. 39 is a sequence regarding a congestion that occurred in the communication system according to the fourth exemplary embodiment;
Fig. 40 is a sequence regarding a congestion recovery in the communication system according to the fourth exemplary embodiment;
Fig. 41 is a sequence regarding a congestion recovery in the communication system according to the fourth exemplary embodiment;
Fig. 42 is a sequence regarding a congestion recovery in the communication system according to the fourth exemplary embodiment;
Fig. 43 is an entire configuration of a communication network regarding eUTRAN (evolved UTRAN) access that is specified by 3GPP;
Fig. 44 is an entire configuration of a communication network regarding a UTRAN with EPC direct tunneling model that is specified by 3GPP;
Fig. 45 is an entire configuration of a communication network regarding UTRAN access with EPC that is specified by 3GPP;
Fig. 46 is an entire configuration of a communication network regarding UTRAN access with GPRS that is specified by 3GPP;
Fig. 47 is a diagram showing an application example of the present invention; and
Fig. 48 is a diagram showing an application example of the present invention.

### Description of Embodiments

### (First exemplary embodiment)

Hereinafter, exemplary embodiments of the present invention shall be explained with reference to the drawings. The present invention can be applied to OpenFlow, VXLAN, NVGRE, DOVE, Cisco NEXUS, Juniper QFabric (registered trademark) and the like. In the following exemplary embodiments, an example using the OpenFlow shall be mainly explained.

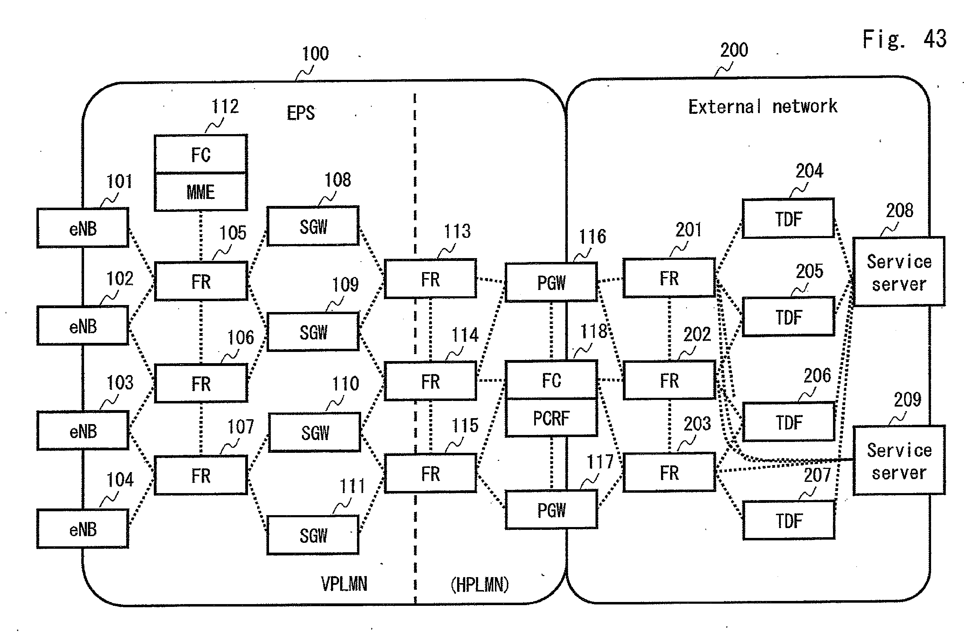

Firstly, an entire configuration of a communication network regarding eUTRAN (evolved UTRAN) access that is specified by 3GPP shall be explained using Fig. 43. The communication network is composed of an EPS 100 and an External network 200. The EPS 100 includes eNBs 101 to 104, FR 105 to 107, SGWs 108 to 111, an FC/MME 112, FRs 113 to 115, PGWs 116 and 117, and an FC/PCRF 118. The External network 200 includes FRs (Flexible Router) 201 to 203, TDFs (Traffic Detection Function) 204 to 207, and Service servers 208 and 209.

The FRs 105 to 107 relay communication between the eNBs 101 to 104 and the SGWs 108 to 111. Further, the FRs 113 to 115 relay communication between the SGWs 108 to 111 and the PGWs 116 and 117. The FR is a communication apparatus used in a system using the OpenFlow and may be, for example, a switch, a router or the like that is controlled by the FC/MME 112 and the FC/PCRF 118.

The FC/MME 112 performs path control on the FRs 105 to 107. That is, the FC/MME 112 sets communication paths between the eNBs 101 to 104 and the SGW 108 to 111. Further, the FC/MME 112 indicates that the FC and MME operate in cooperation with each other.

The FC/PCRF 118 performs path control on the FRs 113 to 115. That is, the FC/PCRF 118 sets communication paths between the SGWs 108 to 111 and the PGWs 116 and 117. Further, the FC/PCRF 118 indicates that the FC and PCRF operate in cooperation with each other.

Next, a configuration example of the External network 200 shall be explained. The FRs 201 to 203 relay a communication between the PGWs 116 and 117 and the TDFs 204 to 207. Moreover, path control on the RFs 201 to 203 is performed using the FC/PCRF 118. That is, the FC/PCRF 118 sets communication paths between the PGWs 116 and 117 and the TDFs 204 to 207.

The Service servers 208 and 209 receive data transmitted via the TDFs 204 to 207 and carry out services.

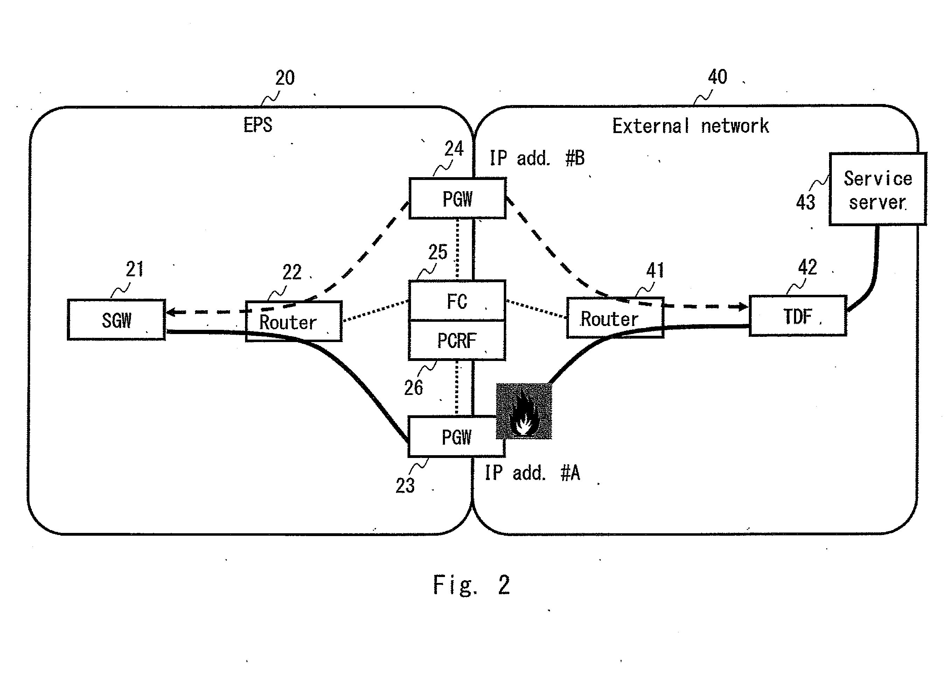

Each of the components in the communication network shall be explained using Figs. 2 and subsequent drawings.

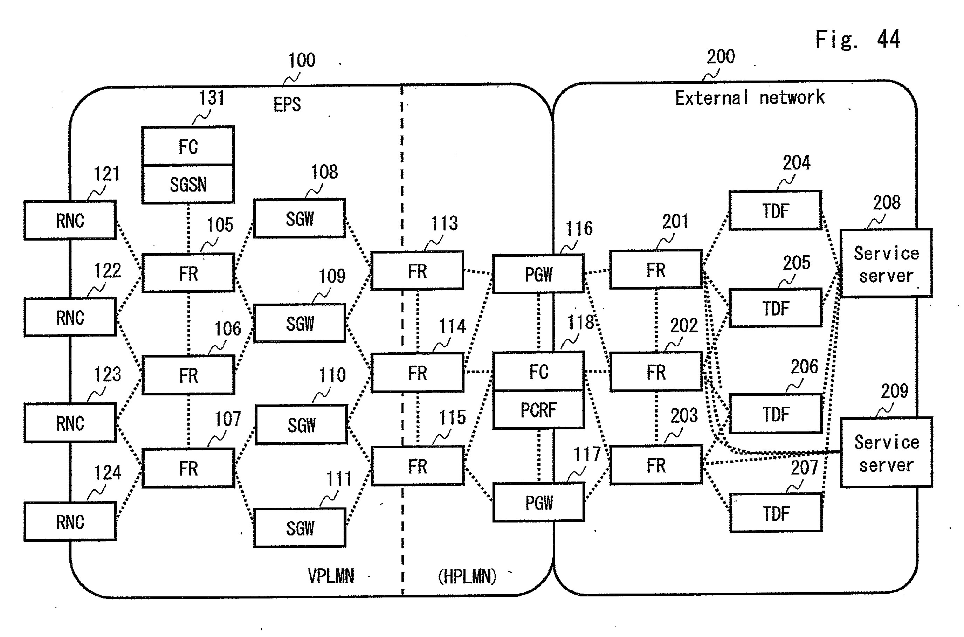

Next, an entire configuration of a communication network regarding a UTRAN with EPC direct tunneling model that is specified by 3GPP shall be explained using Fig. 44. In Fig. 44, RNCs 121 to 124 are used in place of the eNB 101 to 104 in Fig. 43. Further, an FC/SGSN 131 is used in place of the FC/MME 112. The remainder of configuration is the same as the configuration shown in Fig. 43.

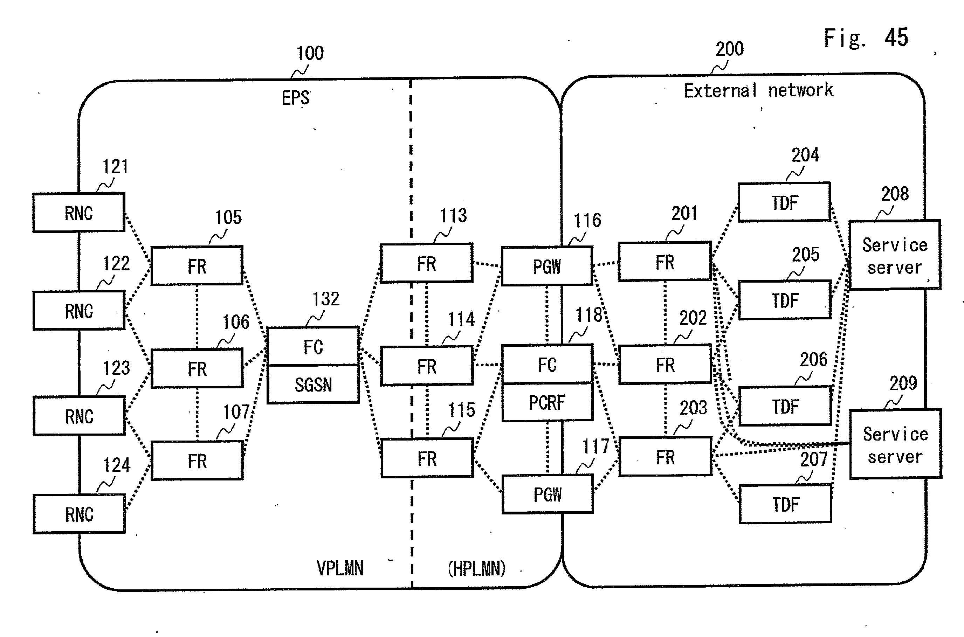

Next, an entire configuration of a communication network regarding UTRAN access with EPC that is specified by 3GPP shall be explained using Fig. 45. In Fig. 45, an FC/SGSN 132 is used in place of the SGWs 108 to 111 between the FRs 105 to 107 and the FRs 113 to 115 in Fig. 44. The FC/SGSN 132 performs path control on the FRs 105 to 107. Moreover, the FRs 105 to 107 transmit control signals transmitted from the RNCs 121 to 124 to the FC/SGSN 132. The remainder of configuration is the same as the configuration shown in Figs. 43 and 44.

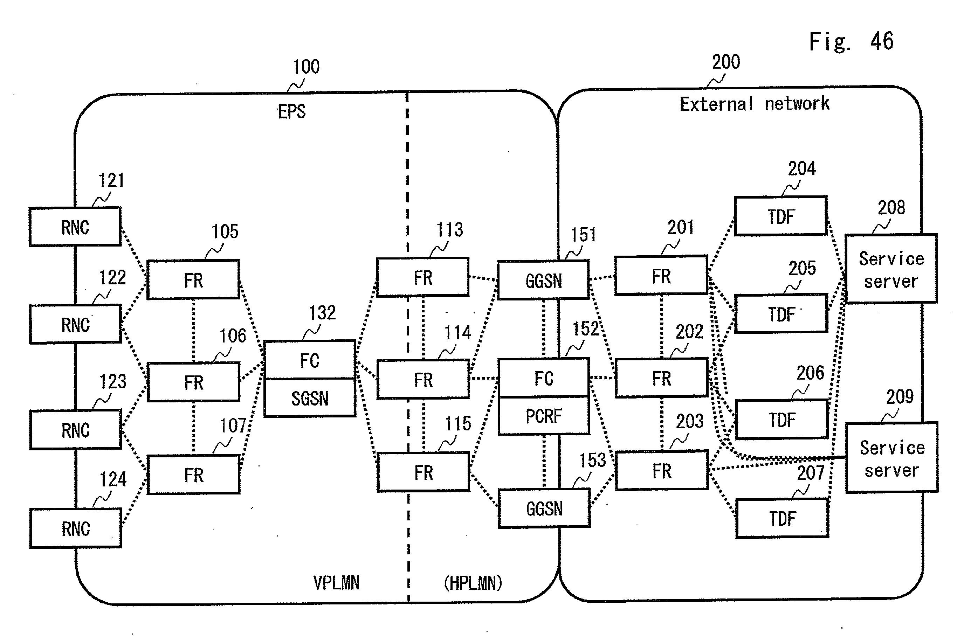

Next, an entire configuration of a communication network regarding UTRAN access with GPRS that is specified by 3GPP shall be explained using Fig. 46. In Fig. 46, GGSNs 151 and 152 are used in place of the PGWs 116 and 117.

Alternatively, as a configuration other than those shown in Figs. 43 to 46, the present invention can be applied to a so-called 2G system by using a BSC (Base Station Controller) in place of the RNCs 121 to 124.

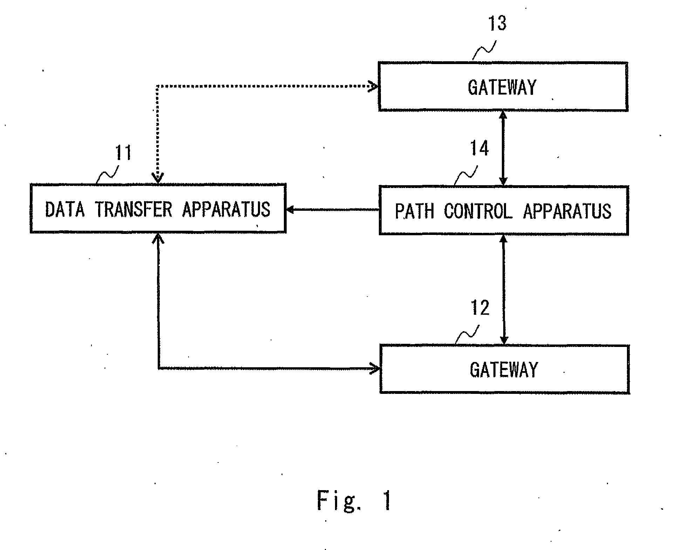

Next, a configuration example of a communication system according to a first exemplary embodiment shall be explained using Fig. 1. The communication system of Fig. 1 includes a data transfer apparatus 11, gateways 12 to 13, and a path control apparatus 14. The data transfer apparatus 11 is an apparatus for relaying data and, for example, may be a router for transferring data using an IP address and an L2 switch for transferring data using an MAC address or the like.

The gateway 12 is an apparatus for communicating with the data transfer apparatus 11. That is, the gateway 12 is an apparatus for actually transmitting data to and receiving data from the data transfer apparatus 11. Further, the gateway 13 is an apparatus which is an alternative to the gateway 12. Specifically, when a failure or the like occurs in the gateway 12, the gateway 13 receives data addressed to the gateway 12 from the data transfer apparatus 11 and performs data processing. When no failure or the like occurs in the gateway 12, the gateway 13 may operate or stop.

The path control apparatus 14 controls communication paths between the data transfer apparatus 11 and the gateway and between the data transfer apparatus 11 and the gateway 13. For example, the path control apparatus 14 may specify either the gateway 12 or 13 as a transfer destination of data from the data transfer apparatus 11 and determine the communication path. A specific operation of the path control apparatus 14 shall be explained below.

When the path control apparatus 14 detects a failure condition in the gateway 12, the path control apparatus 14 controls the data transfer apparatus 11 to change the data transferred from the data transfer apparatus 11 to the gateway 12 so that it is routed to the gateway 13, and notifies the gateway 13 of session information that is set to the gateway 12.

The failure condition in the gateway 12 is a failure and a congestion in the gateway 12 and a path failure between the data transfer apparatus 11 and the gateway 12. That is, the failure condition includes a state in which the gateway 12 is unable to perform the data processing and a state in which the gateway 12 is highly loaded and thus it is difficult for it to perform the data processing.

The session information includes bearer information. The session information may further include control signal information and the like. The bearer information is, for example, connection information that is set in order for the gateway 12 or 13 to transmit data to and receive data from a communication terminal. The communication terminal includes a mobile communication terminal such as a cell phone terminal and a terminal used in MTC (Machine Type Communication). The control signal information may be a signal and the like that is used to set a bearer.

As described above, in the communication system of Fig. 1, even when a failure occurs in the gateway 12, by using the path control apparatus 14, it is possible to switch the data transmitted to the gateway 12 so that it is transmitted to the gateway 13, which is the alternative apparatus. Moreover, it is possible to not only switch the data path, but also to notify the gateway 13 of the session information that is set to the gateway 12. Then, even when a failure occurs in the gateway 12, the data processing that has been executed by the gateway 12 can also be executed by the gateway 13. Therefore, even when a failure occurs in the communication system, by using the alternative apparatus, it is possible to provide services similar to those before the failure occurs.

Next, a failure that occurred in the communication system shall be explained using Fig. 2. Fig. 2 shows a configuration in which communication is performed using an EPS (Evolved Packet System) 20 and External network 40. The EPS 20 is composed of wireless communication realized by, for example, Non-3GPP access represented by LTE (Long Term Evolution), W-CDMA (Wideband Code Division Multiple Access), GERAN (GSM (registered trademark) EDGE Radio Access Network), and WiFi (registered trademark) and a flexible core network provided by the EPC (Evolved Packet Core). The LTE, W-CDMA, GERAN, and EPC are specified in the technical specification of 3GPP. The External network 40 is a Packet Data Network (PDN) that is different from the EPS 20, and for example, a network operated by an entrepreneur that is different from an entrepreneur that operates the EPS 20. The External network 40 may be, for example, a network or the like operated by an internet provider.

The EPS 20 includes an SGW (Serving GW) 21, a Router 22, PGWs (Packet data network GW) 23 and 24, an FC (Flow Controller) 25, and a PCRF (Policy and Charging Rules Function) 26. The External network 40 includes a Router 41, a TDF (Traffic Data Function) 42, and a Service server 43.

The SGW 21 is a logical node for accommodating a system that is referred to as a so-called 3G system by 3GPP and U-Plane (user traffic) with the LTE system. The 3G system mainly uses W-CDMA technology as a wireless scheme.

The SGW 21 transmits user traffic transmitted from UE to the PGW 23 or the PGW 24 via the Router 22. An IP address #A allocated to the PGW 23 or an IP address #B allocated to the PGW 24 is set to the user traffic as a destination address. The Router 22 uses a routing table that associates the destination address with a transfer destination apparatus to transfer the user traffic transmitted from the SGW 21 to the PGW 23 or the PGW 24. In this drawing, the user traffic before a failure occurs in the PGW 23 indicates that the user traffic is transferred to the PGW 23.

The PGWs 23 and 24 are logical nodes having an interface function between the EPS 20 and the External network 40. That is, transmission and reception between a communication apparatus inside the EPS 20 and a communication apparatus or the like inside the External network 40 is performed via the PGW 23 or 24.

The FC 25 determines a transmission path by the unit of flow inside the EPS 20 and notifies the Router 22 of the determined path. The Router 22 transfers data according to path information which the FC 25 notified it about. Further, the FC 25 may determine a transmission path by the unit of flow also inside the External network 40. In this case, the FC 25 notifies the Router 41 of the determined path. The flow is communication traffic identified by a combination of arbitrary addresses in the respective layers of L1 (a physical port etc.), L2 (MAC), L3 (IP), and L4 (a port number) or arbitrary addresses in the respective layers of L1 (a physical port etc.), L2 (MAC), L3 (IP), and L4 (a port number), and an identifier for flow control. Moreover, the unit of flow may be the unit of an EPS bearer determined by a TEID (Tunnel Endpoint Identifier) used as an IP address and an identifier or a combination or the like of a plurality of EPS bearers. Further, the unit of flow may be the unit of subscriber (UE), the unit of service or the like.

The FC 25 combines the arbitrary addresses of the respective layers or the identifier according to a specific rule so as to identify the communication traffic. The path determined by the FC 25, which is the path information transmitted to the Routers 22 and 41, shall be referred to as a routing policy.

The FC 25 may include the session information including the bearer information that is set between the communication terminal and the PGW 23 or 24, the control signal information and the like. For example, the bearer information includes an IP address, TEID, QoS information and the like that are allocated to the communication terminal. The control signal information is, for example, a signal and the like that is used to set the bearer information. The FC 25 notifies the PGWs 23 and 24 of the bearer information and the control information.

The PGWs 23 and 24 are logical nodes for generating billing information and the like.

The Router 41 transmits the data transmitted from the PGW 23 or 24 to the Service server 43 via the TDF 42. Alternatively, the Router 41 transmits the data transmitted from the Service server 43 via the TDF 42 to the PGW 23 or 24. The Service server 43 is a server apparatus disposed inside the External network 40 and, for example, a Web server, a storage apparatus and the like that stores video data.

This drawing illustrates that, when a failure occurs in the PGW 23, as for the user traffic transmitted from the UE, the Router 22 changes data addressed to the PGW 23 so that it is routed to the PGW 24, and as for the user traffic transmitted from the Service server 43, the Router 41 changes data addressed to the PGW 23 so that it is routed to the PGW 24. Further, although an operation when there are two PGWs is shown in this drawing, the present invention can be applied to a case when there are three or more PGWs.

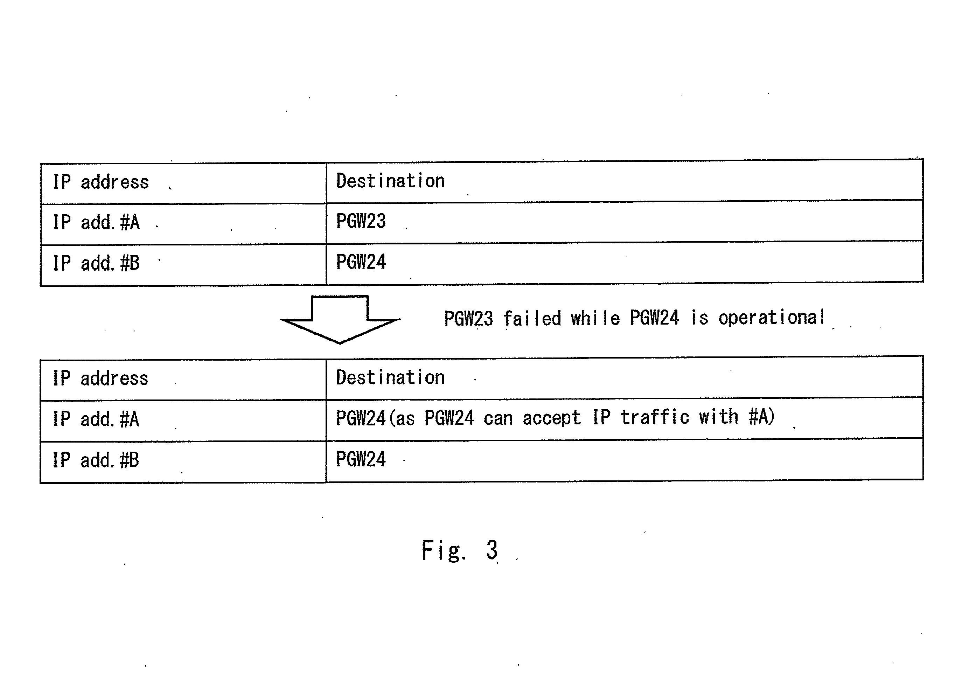

The information set to the routing table held in the Router 22 (the routing policy) shall be explained using Fig. 3. The routing table is composed of IP address information (an IP address) and destination information (Destination). For example, the IP address #A and the PGW 23 are associated, and the IP address #B and the PGW 24 are associated.

After that, when a failure occurs in the PGW 23, the routing table is updated so that the IP address #A is associated with the PGW 24. In this way, after a failure occurs in the PGW 23, the Router 22 transmits the data to which the IP address #A is set as the destination address to the PGW 24. Note that after a failure occurs in the PGW 23, the Router 22 updates the setting information of the routing table based on the path information which the FC 25 notified it about.

Further, when a failure occurs in the PGW 23, the FC 25 notifies the PGW 24 of the session information including the bearer information that is set by the PGW 23, the control signal information and the like. This drawing illustrates that the FC 25 and the PCRF 26 operate in cooperation with each other. The FC 25 and PCRF 26 may be configured as the same apparatus or configured as different apparatuses. Even when a failure occurs in the PGW 23 and the operation is switched to the PGW 24, as the FC 25 and the PCRF 26 operate in cooperation with each other, the bearer information and the like is taken over to the PGW 24, thereby enabling collection of the billing information to be continued. In this manner, in regard to the bearer information taken over to the PGW 24, it is possible to generate billing information that combines the billing information generated by the PGW 23 and the billing information generated by the PGW 24.

When the FC 25 and the PCRF 26 are configured as the same apparatus, by cooperation between the flow control provided by the FC 25 and the policy and billing control provided by the PCRF 26 inside the same apparatus, it is possible to speed up the processing, thereby preventing deterioration of services (e.g., an instantaneous service interruption) that is caused by a switch in the apparatus.

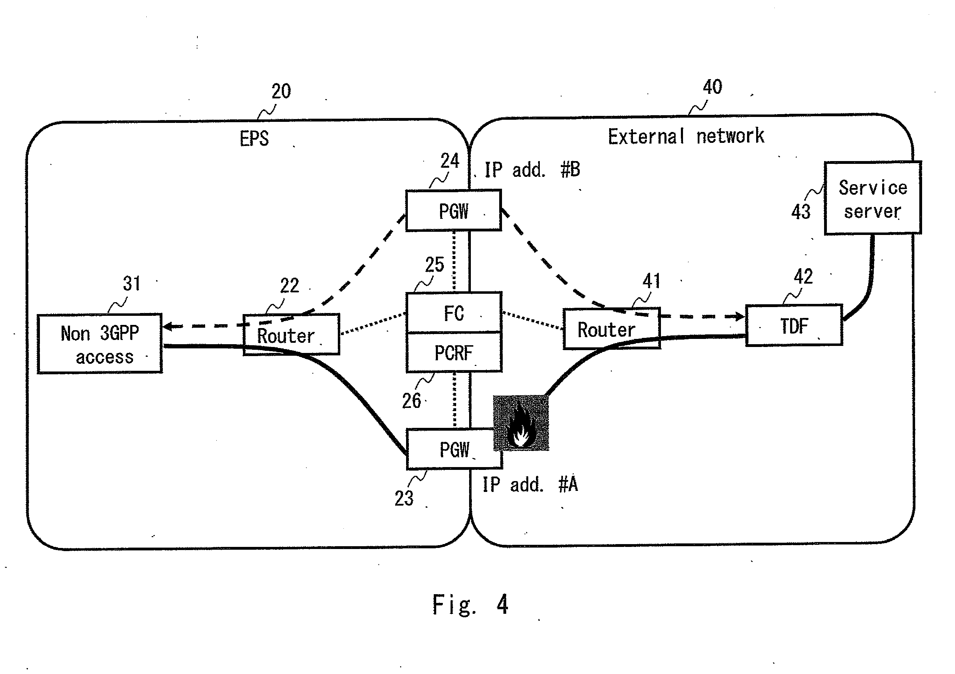

Next, a failure that occurred in the communication system that is different from the case in Fig. 2 shall be explained using Fig. 4. In Fig. 4, Non 3GPP access 31 is used in place of the SGW 21. The remainder of the configuration is the same as the configuration shown in Fig. 2.

The PGW 23 and 24 are logical nodes having an interface function with the External network 40, and the function is specified in the technical specification by 3GPP. For example, the PGW 23 and 24 transmit packet data that is transferred using GTP (GPRS Tunneling Protocol) or PMIP (Proxy Mobile IP), which is packet data transferred from the Non 3GPP access 31 via the Router 22, to the External network 40. This drawing illustrates that, when a failure occurs in the PGW 23, the Router 22 changes the data addressed to the PGW 23 so that it is routed to the PGW 24. As update processing and the like of the routing table by the Router 22 is the same as the one shown in Figs. 2 and 3, a detailed explanation of the updating processing and the like shall be omitted.

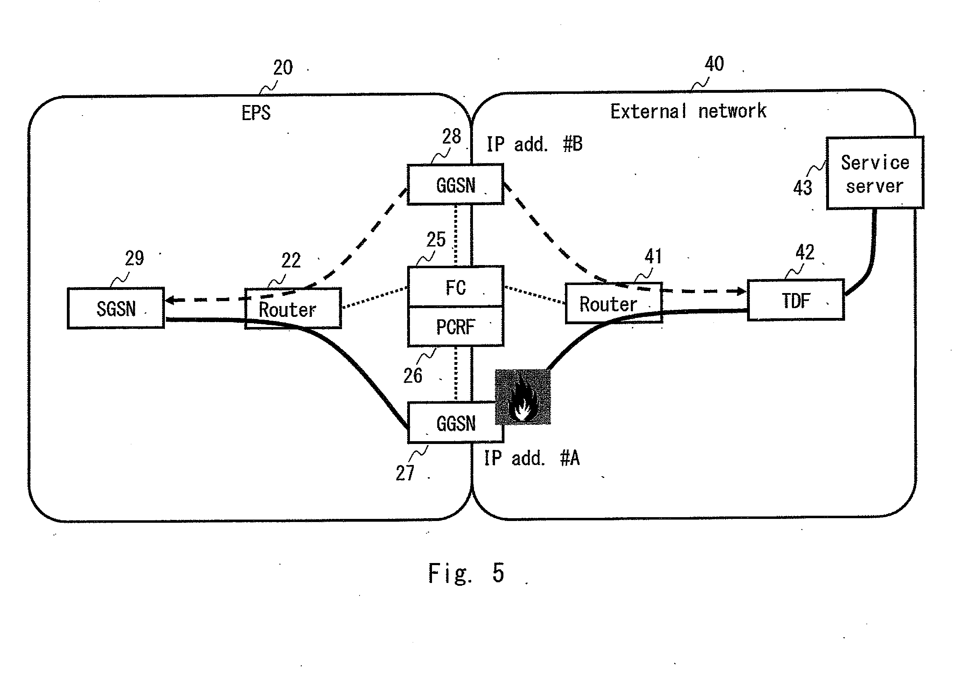

Next, a failure that occurred in the communication system that is different from the cases in Figs. 2 and 4 shall be explained using Fig. 5. In Fig. 5, an SGSN 29 is used in place of the SGW 21. Further, GGSNs 27 and 28 are used in place of the PGWs 23 and 24. The remainder of configuration is the same as the configuration shown in Fig. 4. The SGSN 29 is connected to a wireless access system that is used in a 3G system specified mainly in the 3GPP technical specification and performs data processing on U-Plane data and C-Plane data. The GGSN 27 and 28 are logical nodes having an interface function with the External network 40, and the function is specified in the 3GPP technical specification. This drawing illustrates that, when a failure occurs in the GGSN 27, the Router 22 changes data addressed to the GGNS 27 so that it is routed to the GGSN 28. As the update processing and the like of the routing table by the Router 22 is the same as the one shown in Figs. 2 and 3, a detailed explanation of the update processing and the like shall be omitted.

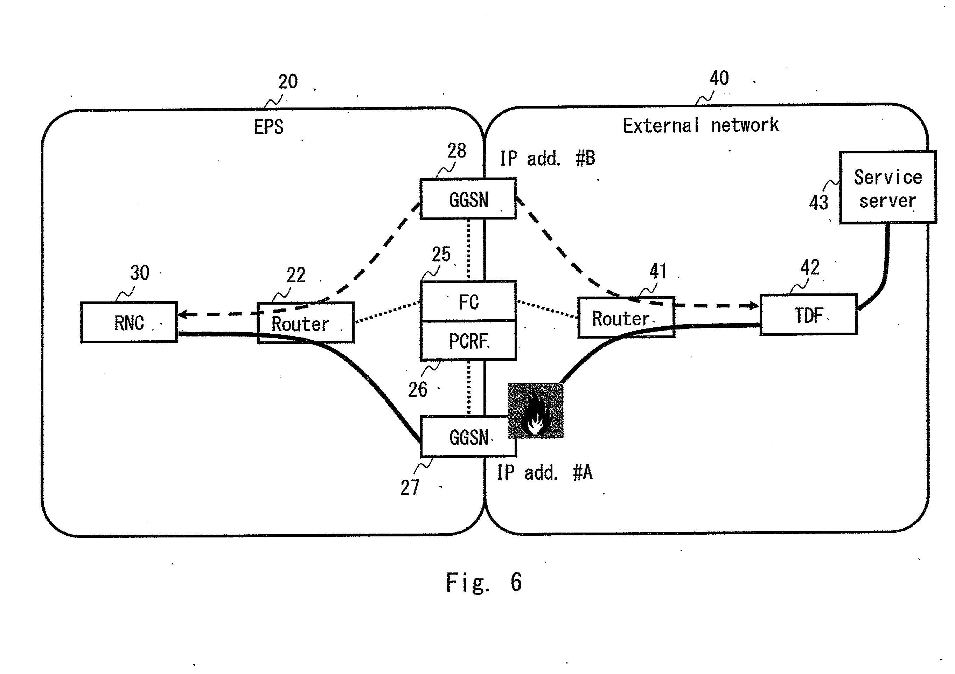

Next, a failure that occurred in the communication system that is different from the cases in Figs. 2, 4, and 5 shall be explained using Fig. 6. In Fig. 6, an RNC 30 is used in place of the SGW 21. The remainder of configuration is the same as the configuration shown in Fig. 5. The RNC 30 controls base stations that are mainly used in the 3G system. For example, the RNC 30 performs handover control and the like between base stations. This drawing illustrates, in a manner similar to Fig. 5, when a failure occurs in the GGSN 27, the Router 22 changes the data addressed to the GGSN 27 so that it is routed to the GGSN 28. As the update processing and the like of the routing table by the Router 22 is the same as the one shown in Figs. 2 and 3, a detailed explanation of the update processing and the like shall be omitted. Further, by using a BSC (Base Station Controller) in place of the RNC 30, the present invention can be applied to a so-called 2G system.

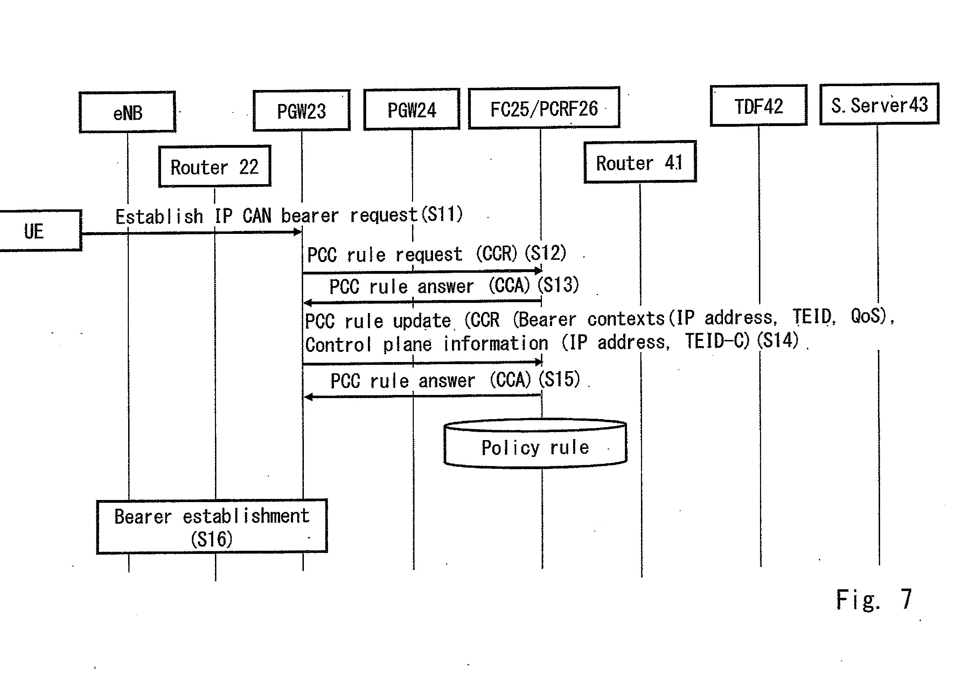

Next, a flow of bearer setting processing shall be explained using Fig. 7. Firstly, UE (User Equipment) transmits an "Establish IP CAN bearer request" to the PGW 23 in order to establish a path with the PGW (S11). The UE is a name indicating, for example, a mobile communication apparatus and the like that is used in a 3GPP system. Next, the PGW 23 transmits a "PCC rule request (CCR)" to the PCRF 26 in order to obtain the policy information and the like (S12). The PCC is an abbreviation for Policy and Charging Control. The PCRF 26 operates in cooperation with the FC 25. Therefore, in the explanations of this drawing and subsequent drawings, the FC 25 and the PCRF 26 are regarded as the same node apparatus.

Next, the PCRF 26 transmits a "PCC rule answer (CCR)" to the PGW 23 in order to set the "PCC rule" to the PGW 23 (S13). Next, the PGW 23 transmits a "PCC rule update (CCR)" in order to perform notification of the bearer information and the control signal information that corresponds to the PCC rule set by the PGW 23 (S14). The PCC rule specifies the policy information, the billing information etc. in a band and the like that is set by the unit of bearer. The bearer information includes, for example, an IP address allocated to the UE, TEID (Tunnel Endpoint Identifier), a QoS parameter and the like. Further, the control signal information includes, for example, the IP address allocated to the UE, TEID-C, a restart counter of its own node, and a restart counter of the corresponding node. The TEID is an identifier that identifies a tunnel for transmitting user data that is set between the UE and the PGW 23. Moreover, the TEID-C is an identifier of a tunnel used on the C-Plane.

The PCRF 26 records the bearer information, the control signal information and the like that is set to the "PCC rule update (CCR)". The PCRF 26 may record the bearer information, the control signal information and the like as the policy rule.

The PCRF 26 transmits the "PCC rule answer (CCA)" to the PGW 23 as a response signal to the "PCC rule update (CCR)" (S15). As a result of this operation, a bearer is established between the UE and the PGW 23 (S16).

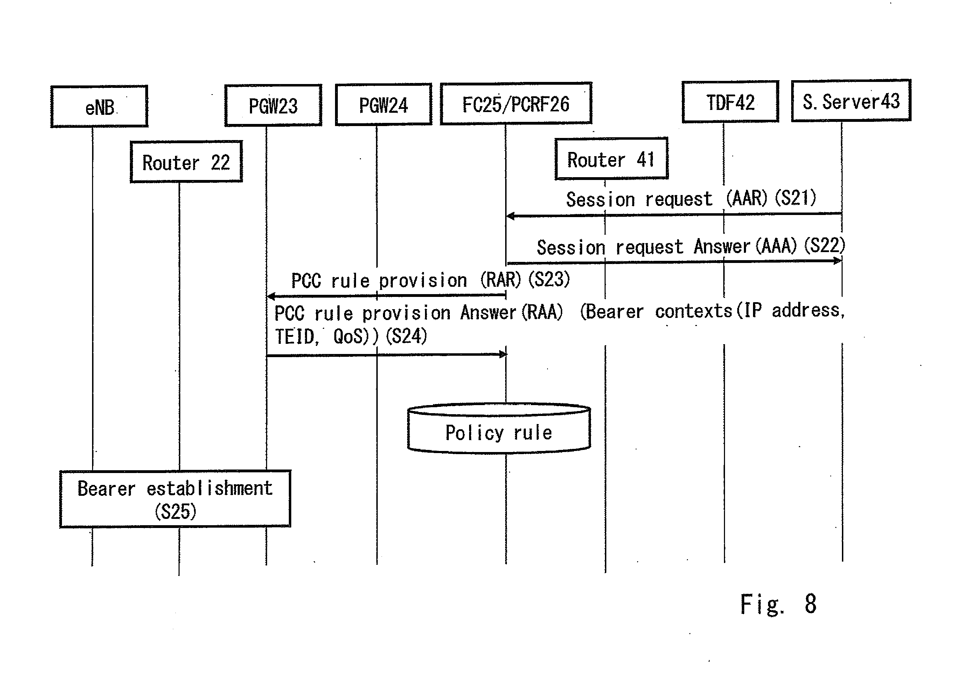

Next, a flow of the bearer setting processing with the External network 40 shall be explained using Fig. 8. Firstly, the Service server 43 transmits a "Session request (AAR)" to the PCRF 26 (S21). Next, the PCRF 26 transmits a "Session request Answer (AAA)" to the Service server 43 as a response to the "Session request (AAR)" (S22). Next, the PCRF 26 transmits a "PCC rule provision (RAR)" to the PGW 23 in order to transmit the PCC rule to the PGW 23 (S23). Next, the PGW 23 transmits a PCC rule provision answer (RAA) to the PCRF 26 in order to notify the PCRF 26 of the bearer information corresponding to the PCC rule that is set by the PGW 23 (S24). The bearer information includes, for example, an IP address allocated to the UE, TEID (Tunnel Endpoint Identifier), a QoS parameter and the like.

The PCRF 26 records the bearer information that is set to the "PCC rule provision answer (RAA)". The PCRF 26 may record the bearer information as the policy rule. As a result of this operation, a bearer is established between the UE and the PGW 23 (S25).

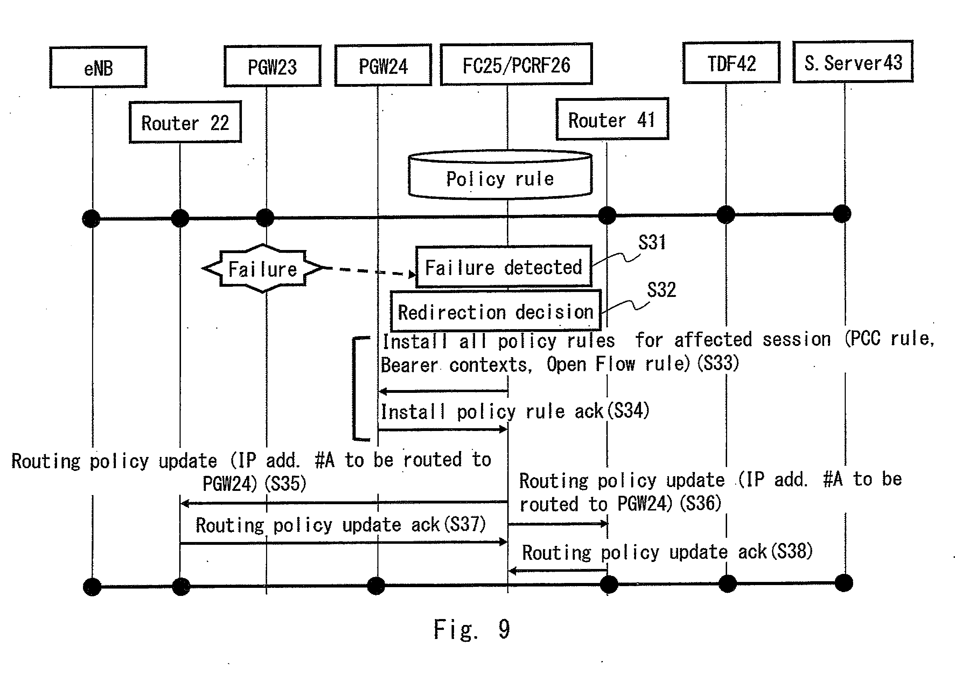

Next, a flow of processing when the PCRF 26 detects a failure in the PGW 23 shall be explained using Fig. 9. Firstly, the PCRF 26 detects the failure in the PGW 23 (S31). The PCRF 26 may detect the failure in the PGW 23 using a network management protocol such as SNMP (Simple Network Management Protocol), ICMP (Internet Control Message Protocol) or the like. Alternatively, the PCRF 26 may detect the failure in the PGW 23 using a keep alive function of the SCTP (Stream Control Transmission Protocol).

Next, the PCRF 26 starts Redirection decision processing in order for the PGW 24, an apparatus which is an alternative to the PGW 23, to continue a data communication service (S32). Next, the PCRF 26 notifies the PGW 24 of an "Install all policy rules for affected session" in order to notify the PGW 24 of the policy information on a flow that is affected by the failure that has occurred in the PGW 23 (S33). The policy information includes the session information. The session information includes the PCC rule, the bearer information, the control signal information, an OpenFlow rule and the like. The OpenFlow rule is a control rule that is applied, for example, when the FC 25 operates as an OpenFlow controller, and the Routers 22 and 41 are OpenFlow switches or the like that are controlled using the OpenFlow controller. Next, the PGW 24 notifies the PCRF 24 of an "Install policy rule ack" as a response signal to the "Install all policy rules for affected session" (S34).

Steps S33 and S34 may be executed for each UE that has a bearer established with the PGW 23 or may be executed for the plurality of UEs at the same time using a bulk message in order to collectively transmit the policy information of the plurality of UEs. By using the bulk message, it is possible to reduce the switching time, the amount of processing, and the processing load as compared to the case in which a message is transmitted to each UE.

Next, the FC 25 transmits a "Routing policy update" in order to notify the Router 22 of the routing policy (S35). When the Router 22 receives the "Routing policy update", the Router 22 updates the routing table, as explained using Fig. 3. Specifically, the Router 22 updates the routing table so that the user data to which the IP address #A is set as the destination IP address is transferred to the PGW 24 (S36). Similarly, the FC 25 transmits the "Routing policy update" to the Router 41 (S36).

Next, the Router 22 transmits a "Routing policy update ack" to the FC 25 (S37), and the Router 41 transmits the "Routing policy update ack" to the FC 25 (S38).

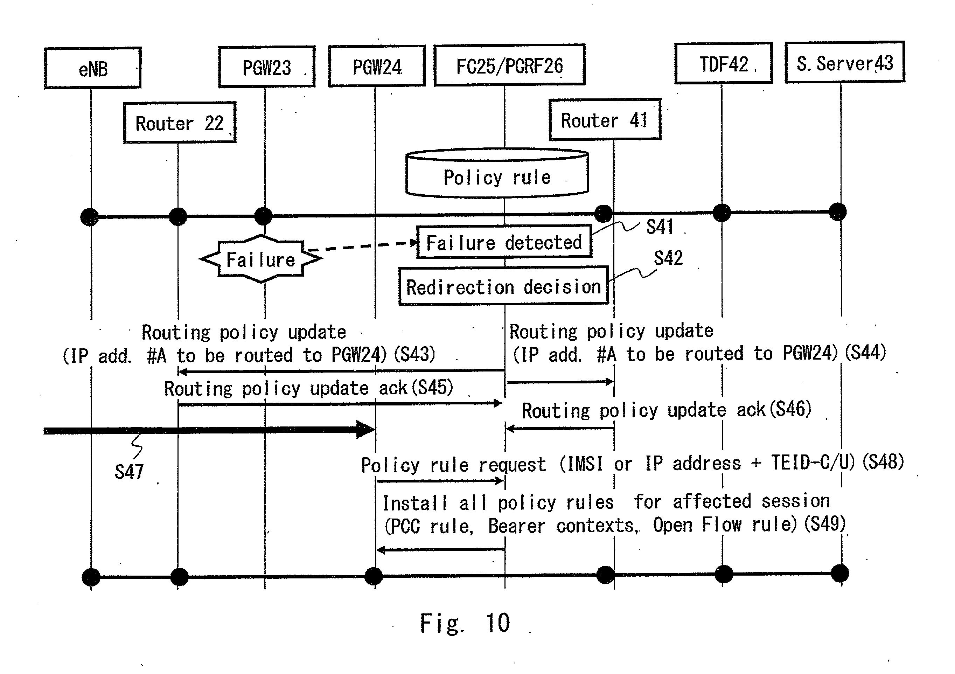

Next, a flow of processing when the PCRF 26 detects a failure in the PGW 23 that is different from the example of Fig. 9 shall be explained using Fig. 10. As Steps S41 and S42 are similar to Steps S31 and S32 in Fig. 9, an explanation of Steps S41 and S42 shall be omitted.

Next, the FC 25 transmits the "Routing policy update" to the Router 22 (S43). When the Router 22 receives the "Routing policy update", the Router 22 updates the routing table, as explained using Fig. 3. Specifically, the Router 22 updates the routing table so that the user data to which the IP address #A is set as the destination IP address is transferred to the PGW 24. Similarly, the FC 25 transmits the "Routing policy update" to the Router 41 (S44).

Next, the Router 22 transmits the "Routing policy update ack" to the FC 25 (S45), and the Router 41 transmits the "Routing policy update ack" to the FC 25 (S46).

Next, when the routing table in the Router 22 is updated, U-Plane traffic or C-Plane traffic to which the IP address #A is set as the destination IP address is transmitted to the PGW 24 (S47). Next, the PGW 24 transmits a "Policy rule request" to the PCRF 26 in order to receive the policy information including the session information (S48). The "Policy rule request" includes IMSI or the IP address regarding the flow received by the PGW 24 and the TEID or TEID-C. Next, the PCRF 26 transmits the "Install all policy rules for affected session" including the session information to the PGW 24 (S49).

As described so far, in Fig. 10, unlike Fig. 9, when the failure in the PGW 23 is detected, the routing tables in the Routers 22 and 41 are updated, and after that, when data is transmitted to the PGW 24, the PGW 24 is notified of the policy information. By performing processing in this order, it is not necessary to set the bearers regarding all the UEs to the PGW 24, which will be switched thereto, and only the bearer that transmitted the data should be set to the PGW 24. By doing so, it is possible to reduce the number of bearers that are set by the PGW 24, reduce the switching time, and reduce the processing load in the PGW 24.

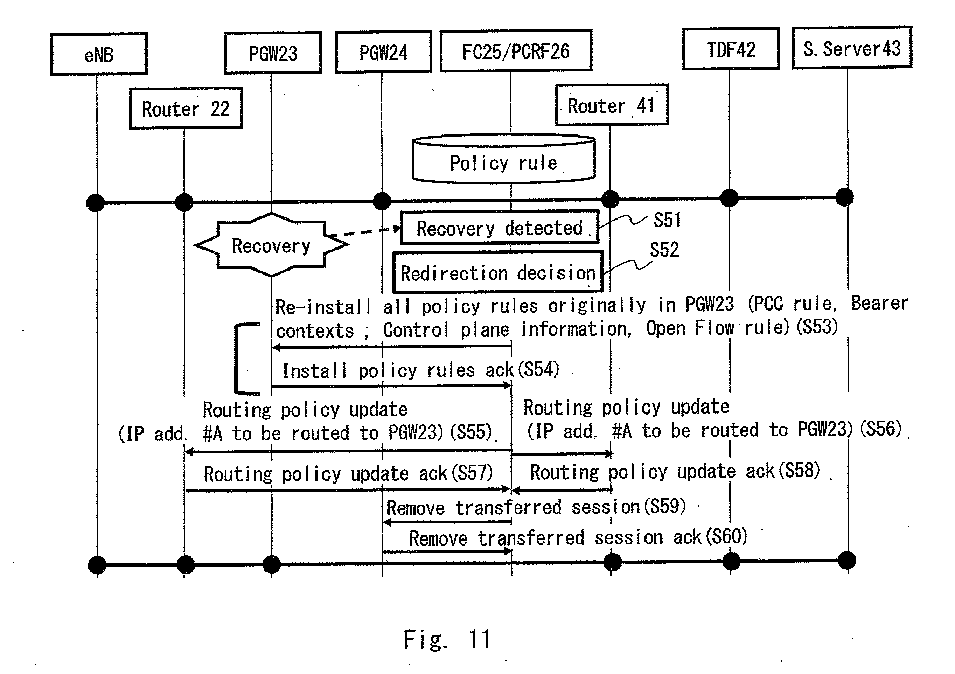

Next, a flow of processing when a failure occurred in the PGW 23 is recovered shall be explained using Fig. 11. Firstly, the FC 25 detects that a failure in the PGW 23 has recovered (S51). For example, the FC 25 may detect that the failure in the PGW 23 has recovered using the network management protocol such as the SNMP, the ICMP or the like.

Next, as the PGW 23 has recovered, the FC 25 starts the Redirection decision processing in order to switch the data communication service from the PGW 24, which is the alternative apparatus, to the PGW 23 (S52). Next, the PCRF 26 notifies the PGW 23 of "Re-Install all policy rules originally in PGW23" in order to notify the PGW 23 of the policy information (S53). The policy information includes the session information including the PCC rule, the bearer information, the control signal information, the OpenFlow rule and the like. Next, the PGW 23 notifies the PCRF 26 of the "Install policy rule ack" as a response signal to the "Re-Install all policy rules originally in PGW23" (S54).

Steps S53 and S54 may be executed for each UE that has a bearer established with the PGW 23 or may be executed for plurality of UE using a bulk message in order to collectively transmit the policy information of the plurality of UEs. By using the bulk message, it is possible to reduce the switching time, the amount of processing, and the processing load as compared to the case in which a message is transmitted to each UE.

Next, the FC 25 transmits the "Routing policy update" to the Router 22 (S55). When the Router 22 receives the "Routing policy update", the Router 22 updates the routing table. Specifically, the Router 22 updates the routing table so that the user data to which the IP address #A is set as the destination IP address is transferred to the PGW 23. Similarly, the FC 25 transmits the "Routing policy update" to the Router 41 (S56).

Next, the Router 22 transmits the "Routing policy update ack" to the FC 25 (S57), and the Router 41 transmits the "Routing policy update ack" to the FC 25 (S58).

Next, the PCRF 26 transmits a "Remove transferred session" to the PGW 24 in order to delete a session that becomes unnecessary in the PGW 24 when the PGW 23 recovers and the PGW 24 is switched to the PGW 23 (S59). After the PGW 24 deletes the unnecessary session, the PGW 24 transmits a "Remove transferred session ack" to the PCRF 26 (S60).

Processing using the restart counter shall be explained below. When the current GTP protocol is used, the PGW and the SGW regularly notify each other of the restart counter. When a failure occurs in one of the PGW and SGW and the one of the PGW and SGW recovers from the failure, the one of the PGW and SGW increments the restart counter and notifies the other one of the PGW and SGW of the restart counter. When the other one of the PGW and SGW detects the increment of the restart counter, the other one of the PGW and SGW deletes a tunnel regarding the one of the PGW and SGW. Meanwhile, in the PGW and SGW according to the present invention, the PGW and SGW that recovered from the failure are controlled to maintain the existing tunnel. That is, the PGW and SGW that recovered from the failure operate so as not to increment the restart counter even when they recovered so that the tunnel will not be deleted by mistake.

Next, a flow of processing when a failure occurred in the PGW 23 recovered that is different from the example in Fig. 11 shall be explained. Firstly, when the PGW 23 recovers, the PGW 23 transmits to the PCRF 26 a "Recovery notification" (S61).

Next, the PCRF 26 notifies the PGW 23 of the "Re-Install all policy rules originally in PGW23" in order to notify the PGW 23 of the policy information (S62). The policy information includes the session information including the PCC rule, the bearer information, the control signal information, the OpenFlow rule and the like. Next, the PGW 23 notifies the PCRF 26 of the "Install policy rule ack" as a response signal to the "Re-Install all policy rules originally in PGW23" (S63).

Steps S62 and S63 may be executed for each UE that has a bearer established with the PGW 23 or may be executed for plurality of UE using a bulk message in order to collectively transmit the policy information of the plurality of UEs. By using the bulk message, it is possible to reduce the switching time, the amount of processing, and the processing load as compared to the case in which a message is transmitted to each UE.

Next, the PCRF 26 transmits a "Recovery ask" to the PGW 23 as a response to the "Recovery notification" (S64). As processing in Steps S65 to S70 is similar to the processing in Steps S55 to S60 in Fig. 11, a detailed explanation of Steps S65 to S70 shall be omitted.

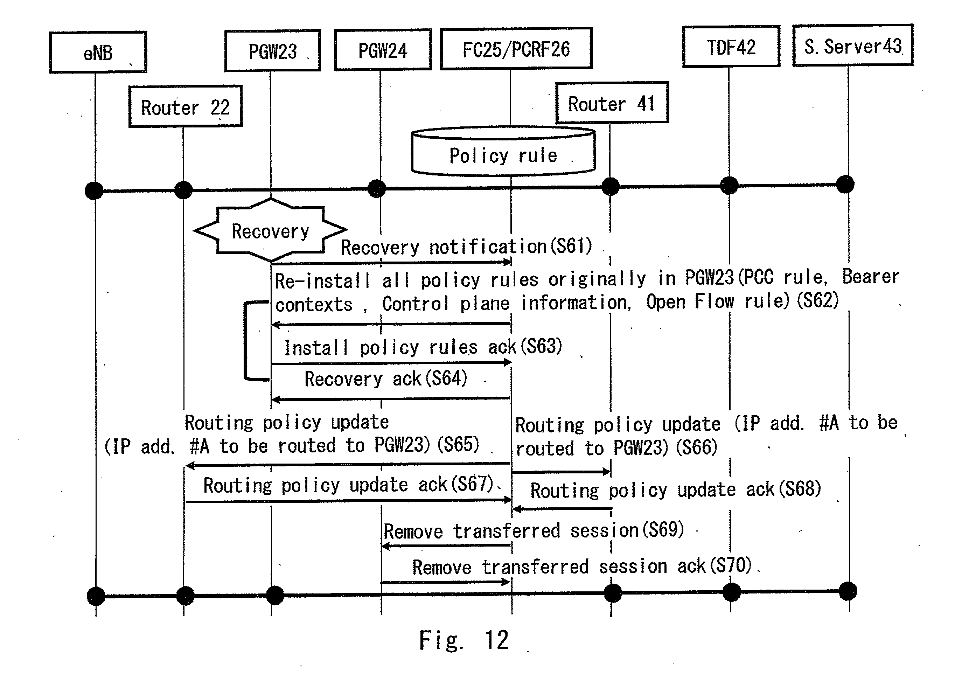

Next, a flow of processing when a failure occurred in the PGW 23 recovered that is different from the examples in Figs. 11 and 12 shall be explained. Firstly, the PCRF 26 detects that the failure in the PGW 23 has recovered (S71). For example, the FC 25 may detect that the failure in the PGW 23 has recovered using the network management protocol such as the SNMP, the ICMP or the like.

Next, as the PGW 23 has recovered, the PCRF 26 starts the Redirection decision processing in order to switch the data communication service from the PGW 24, which is the alternative apparatus, to the PGW 23 (S72).

Next, the FC 25 transmits the "Routing policy update" to the Router 22 (S73). When the Router 22 receives the "Routing policy update", the Router 22 updates the routing table. Specifically, the Router 22 updates the routing table so that the user data to which the IP address #A is set as the destination IP address is transferred to the PGW 23. Similarly, the FC 25 transmits the "Routing policy update" to the Router 41 (S74).

Next, the Router 22 transmits the "Routing policy update ack" to the FC 25 (S75), and the Router 41 transmits the "Routing policy update ack" to the FC 25 (S76).

Next, the U-Plane traffic or the C-Plane traffic to which the IP address #A is set as the destination IP address is transmitted to the PGW 23 (S77). Next, the PGW 23 transmits the "Policy rule request" to the PCRF 26 in order to receive the policy information regarding the data to which the IP address #A is set as the destination IP address (S78). The "Policy rule request" includes the IMSI or the IP address regarding the flow received by the PGW 23 and the TEID or TEID-C. As the processing in Step S79 is similar to the processing in Step S53 in Fig. 11, a detailed explanation of Step S79 shall be omitted. Further, as the processing in Steps S80 and S81 is similar to Steps S59 and S60 in Fig. 11, a detailed explanation of Steps S80 and S81 shall be omitted.

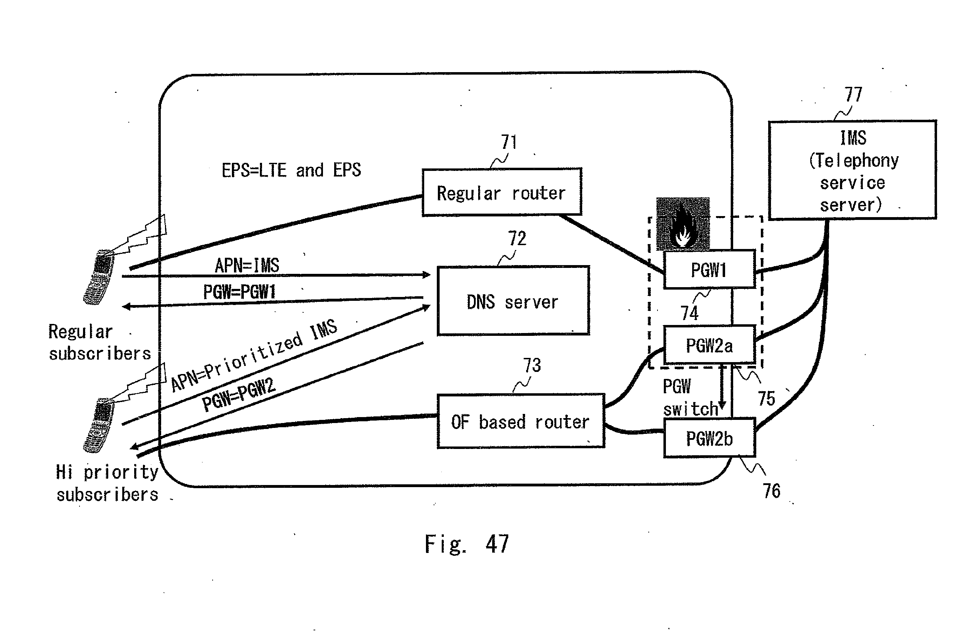

Next, a network configuration for improving the failure tolerance of a part of the PGWs and the GGSNs in the network shall be explained using Fig. 47. Normally, a service accessed by a user is determined by specifying an APN (Access Point Name), however this drawing indicates that an IMS system 77 is accessed using a special APN by a subscriber that performs emergency communication with, for example, police and a fire department. Note that the IMS system is a system that provides a telephony service such as a voice service.

The PGW is selected by the APN specified by the user or the APN specified by a user profile via a DNS server. In this drawing, a PGW 74 is specified by a DNS server 72 for an IMS access request from a normal subscriber, while a PGW 75 is specified by the DNS server 72 for an IMS access request from a high priority subscriber.

This drawing assumes a case in which the PGWs 74 and 75 are disposed in the same building, and the PGWs 74 and 75 become unable to operate due to a disaster of the building such as a fire. Further, the PGWs 75 and 76 are switched and selected by an OF based router 73 that is used in the OpenFlow system.

Under this assumption, although an IMS service is interrupted for the normal subscribers, the OF based router 73 changes a path from the PGW 75 to the alternative PGW 76. In this manner, it is possible to continue the IMS service for the high priority subscribers.

This drawing illustrates an example in which the network is enhanced while minimizing an investment to the network by applying the OpenFlow technology to highly emergency communications.

### (Second exemplary embodiment)

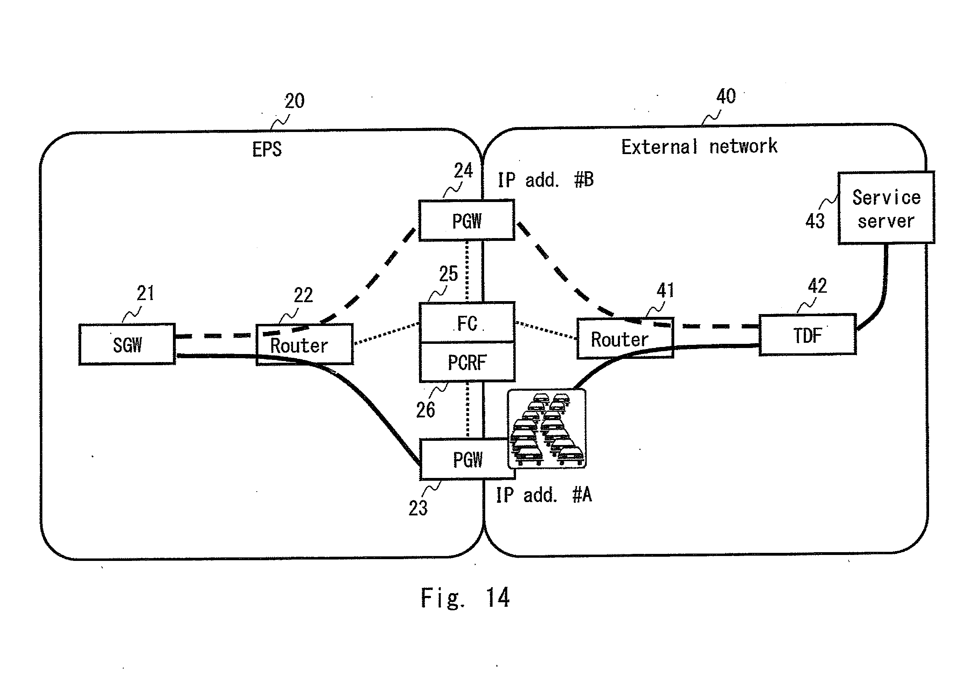

Next, a congestion that occurred in the communication system shall be explained using Fig. 14. As a network configuration of this drawing is similar to the one in Fig. 2, a detailed explanation of the network configuration shall be omitted. This drawing illustrates that, when a congestion occurs in the PGW 23, as for the user traffic transmitted from the UE, the Router 22 changes part of data addressed to the PGW 23 so that it is routed to the PGW 24, and as for the user traffic transmitted from the Service server 43, the Router 41 changes part of data addressed to the PGW 23 so that it is routed to the PGW 24. Note that the GGSN may be used in place of the PGWs 23 and 24. Further, the SGSN or SNC may be used in place of the SGW 21.

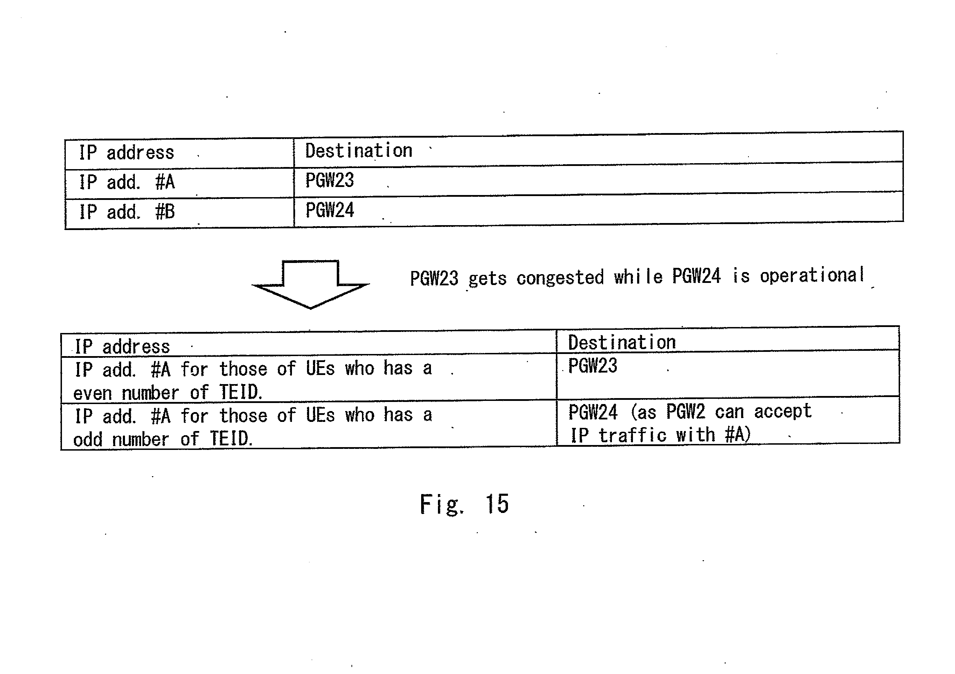

Information set to the routing table held in the Router 22 shall be explained using Fig. 15. The routing table is composed of IP address information (an IP address) and destination information (Destination). For example, the IP address #A and the PGW 23 are associated, and the IP address #B and the PGW 24 are associated.

After that, when a congestion occurs in the PGW 23, the routing table is updated so that the IP address #A that is associated with an even-numbered TEID is associated with the PGW 23. Further, the routing table is updated so that the IP address #A that is associated with an odd-numbered TEID is associated with the PGW 24. In this way, when a congestion occurs in the PGW 23, the Router 22 can change the packet data addressed to the IP address #A that is associated with the odd-numbered TEID so that it is routed to the PGW 24. It is thus possible to reduce the packet data addressed to the PGW 23, thereby resolving the congested state of the PGW 23. The above-mentioned association between the even or odd-numbered TEID and the IP address is merely an example and, for example, the IP address #A that is associated with the even-numbered TEID and the PGW 24 may be associated, and the IP address #A that is associated with the odd-numbered TEID may be associated with the PGW 23.

Although an example of updating the association between the IP address that is associated with the odd-numbered TEID and the PGW has been explained above, a range of the TEID may be used in place of the odd-numbered TEID. Alternatively, instead of using the TEID, a range of GRE Key of a PMIP tunnel or an odd or even-numbered GRE Key may be used. Further alternatively, instead of the TEID and the GRE Key, association can be made with the SGW with which the PGW communicates, and the setting of the routing table may be made by a telecommunications carrier using its own measure.

Note that when a congestion occurs in the PGW 23, the Router 22 updates the setting information of the routing table based on the path information which the FC 25 notified it about, that is, the routing policy.

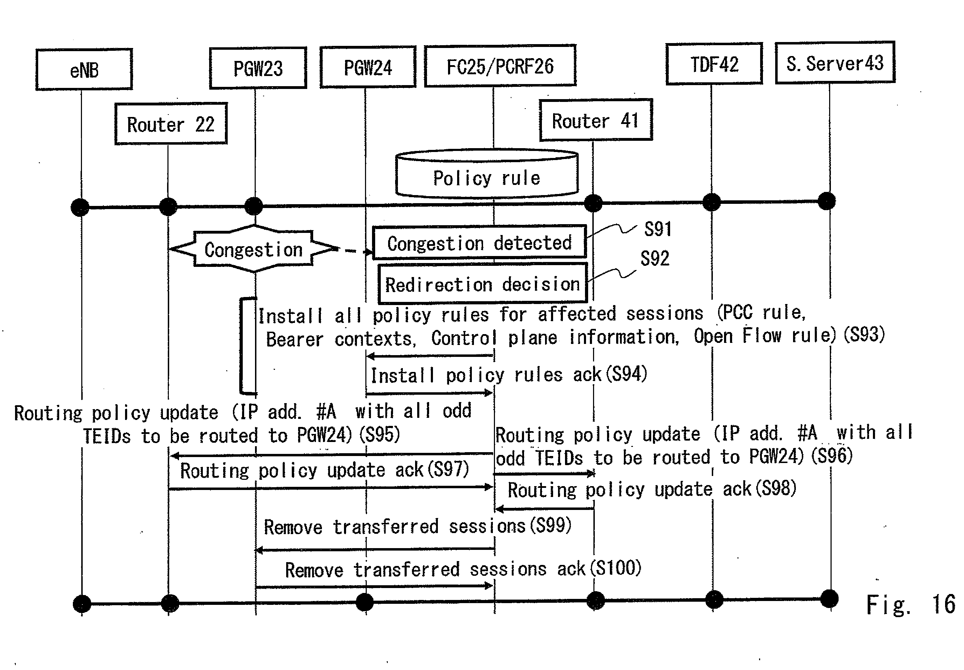

Next, a flow of processing when the PCRF 26 detects a congestion in the PGW 23 shall be explained using Fig. 16. Firstly, the PCRF 26 detects the congestion in the PGW 23 (S91). The PCRF 26 may detect the congestion in the PGW 23 by using the network management protocol such as the SNMP, the ICMP or the like.

Next, the PCRF 26 starts the Redirection decision processing in order for the PGW 24, which is an apparatus alternative to the PGW 23, to carry out the data communication service (S92). Next, the PCRF 26 notifies the PGW 24 of the "Install all policy rules for affected session" in order to notify the PGW 24 of the policy information of the flow that is affected by the failure occurred in the PGW 23 (S93). The policy information includes the session information including the PCC rule, the bearer information, the control signal information, the OpenFlow rule and the like. Next, the PGW 24 notifies the PCRF 26 of the "Install policy rule ack" as a response signal to the "Install all policy rules for affected session" (S94).

Steps S93 and S94 may be executed for each UE that has a bearer established with the PGW 23 or may be executed for plurality of UE using a bulk message in order to collectively transmit the policy information of the plurality of UEs. By using the bulk message, it is possible to reduce the switching time, the amount of processing, and the processing load as compared to the case in which a message is transmitted to each UE.

Next, the FC 25 transmits the "Routing policy update" to the Router 22 (S95). When the Router 22 receives the "Routing policy update", the Router 22 updates the routing table, as explained using Fig. 15. Specifically, the Router 22 updates the routing table so that the user data to which the destination IP address #A is set that is associated with the odd-numbered TEID is routed to the PGW 24. Similarly, the FC 25 transmits the "Routing policy update" to the Router 41 (S96).

Next, the Router 22 transmits the "Routing policy update ack" to the FC 25 (S97), and the Router transmits the "Routing policy update ack" to the FC 25 (S98).

Next, the PCRF 26 transmits the "Remove transferred session" to the PGW 23 in order to delete a session that becomes unnecessary when part of the packet data addressed to the PGW 23 is routed to the PGW 24 (S99). After the PGW 23 deletes the unnecessary session, the PGW 23 transmits the "Remove transferred session ack" to the PCRF 26 (S100).

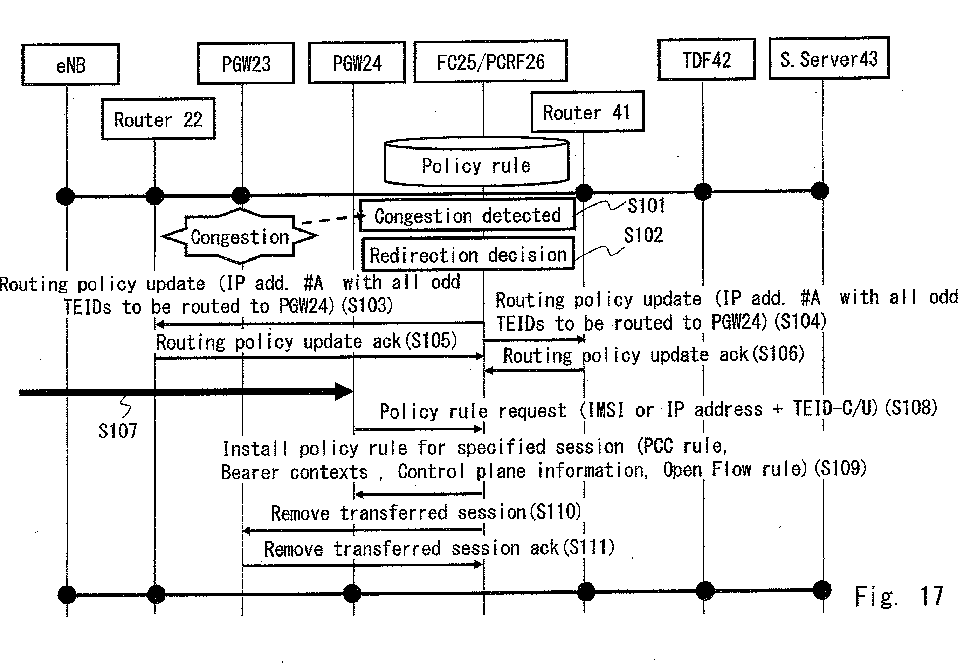

Next, a flow of processing when the PCRF 26 detects a congestion in the PGW 23 that is different from the example in Fig. 16 shall be explained using Fig. 17. As Steps S101 and S102 are similar to Steps S91 and 92 in Fig. 16, an explanation of Steps S101 and S102 shall be omitted. Further, Steps S103 to S106 are similar to Steps S95 to 98 in Fig. 16, an explanation of Steps S103 to S106 shall be omitted.

Next, after the Router 22 updates the routing table so that part of the data addressed to the PGW 23 is routed to the PGW 24 until Step S106, the PGW 24 receives the user data to which the IP address #A is set as the destination IP address from the Router 22 (S107).

Next, the PGW 24 transmits the "Policy rule request" to the PCRF 26 in order to receive the policy information corresponding to the received user data (S108). The "Policy rule request" includes the IMSI or the IP address regarding the flow received by the PGW 24 and the TEID or the TEID-C. Next, the PCRF 26 transmits an "Install policy rule for specified session" to the PGW 24 in order to notify the PGW 24 of the session information including the PCC rule, the bearer information, the control signal information, the Open Flow rule and the like regarding the flow received by the PGW 24 (S109).

As Steps S110 and S111 are similar to Steps S99 and S110 in Fig. 16, an explanation of Steps S110 and S111 shall be omitted.

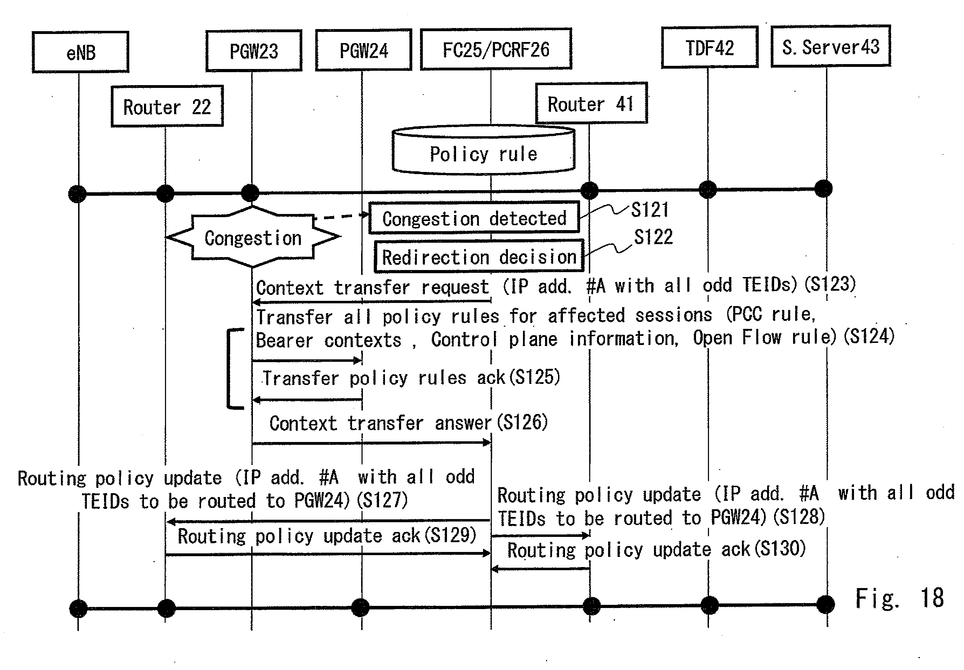

Next, a flow of processing when the PCRF 26 detects a congestion in the PGW 23 that is different from the examples in Figs. 16 and 17 shall be explained using Fig. 18. As Steps S121 and S122 are similar to Steps S91 and S92 in Fig. 16, an explanation of Steps S121 and S122 shall be omitted.

Next, the PCRF 26 notifies the congested PGW 23 of the routing policy, which will be transitioned to the PGW 24, and transmits a "Context transfer request" in order to prompt a transition of a part or all of the sessions (S123). In this example, the IP address #A that is associated with the odd-numbered TEID is specified as a transition target.

Next, the PGW 23 transmits a "Transfer all policy rules for affected sessions" to the PGW 24 in order to notify the PGW 24 of the session information (the PCC rule, the bearer information, the control signal information, the Open Flow rule and the like) that corresponds to the routing policy information which will be transitioned (S124).

Steps S123 and S124 may be executed for each UE that has a bearer established with the PGW 23 or may be executed for plurality of UE using a bulk message in order to collectively transmit the policy information of the plurality of UEs. By using the bulk message, it is possible to reduce the switching time, the amount of processing, and the processing load as compared to the case in which a message is transmitted to each UE.

Next, the PGW 24 transmits a "Transfer policy rules ack" to the PGW 23 as a response signal (S125). Next, the PGW 23 transmits a "Context transfer answer" to the FC 25 as a response signal to the "Context transfer request".

As Steps S127 to S130 are similar to Steps S95 to 98 in Fig. 16, an explanation of Steps S127 to S130 shall be omitted.

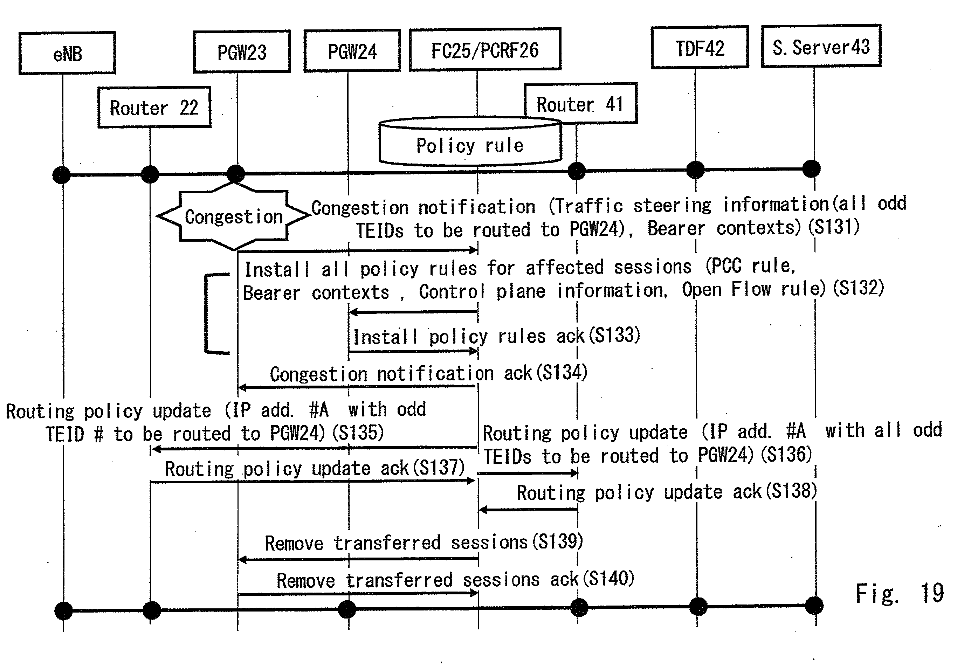

Next, a flow of processing when the PCRF 26 detects a congestion in the PGW 23 that is different from the examples in Figs. 16 to 18 shall be explained using Fig. 19. Firstly, when a congestion occurs in the PGW 23, the PGW 23 transmits a "Congestion notification" to the PCRF 26 in order to notify the PCRF 26 of the congestion (S131). The "Congestion notification" includes the routing policy information which will be transitioned to the PGW 24, and the PGW 23 prompts a transition of a part or all of sessions. As a target which will be transitioned, the IP address #A that is associated with the odd-numbered TEID is specified.

As Steps S132 and S133 are similar to Steps S93 and S94 in Fig. 16, an explanation of Steps S132 to S133 shall be omitted. After Step S133, the PCRF 26 transmits a "Congestion notification ack" to the PGW 23 as a response signal to the "Congestion notification" (S134). As Steps S135 to S140 are similar to Steps S95 to S110 in Fig. 16, an explanation of Steps S135 to S140 shall be omitted.

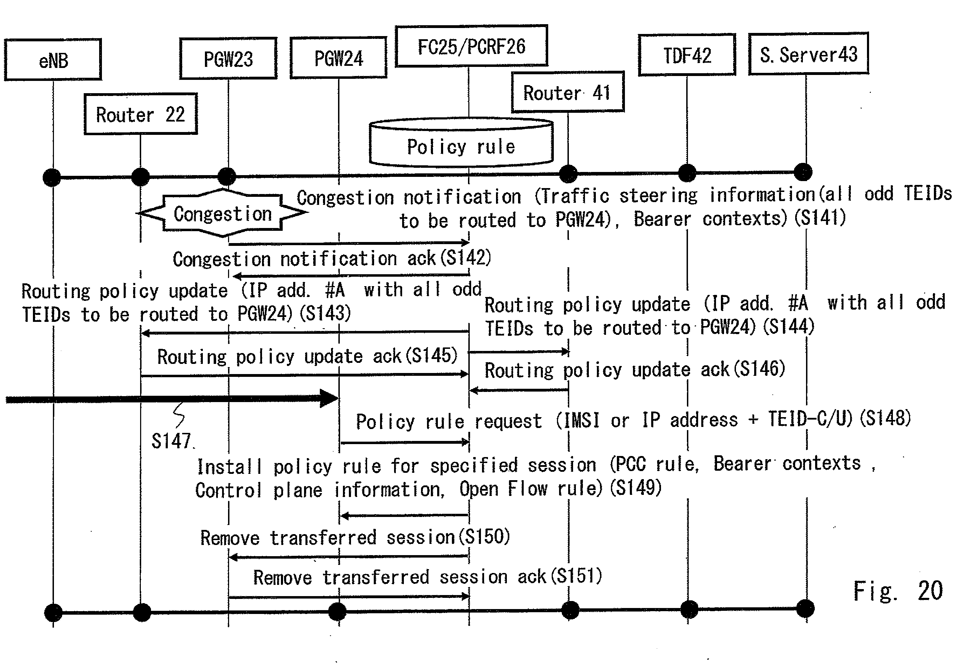

Next, a flow of processing when the PCRF 26 detects a congestion in the PGW 23 that is different from the examples in Figs. 16 to 19 shall be explained using Fig. 20. As Step S141 is similar to S131 in Fig. 1, an explanation of Step S141 shall be omitted. Next, the PCRF 26 transmits the "Congestion notification ack" as a response signal (S142). As Steps S143 to S151 are similar to Steps S103 to S111 in Fig. 17, an explanation of Steps S143 to S151 shall be omitted.

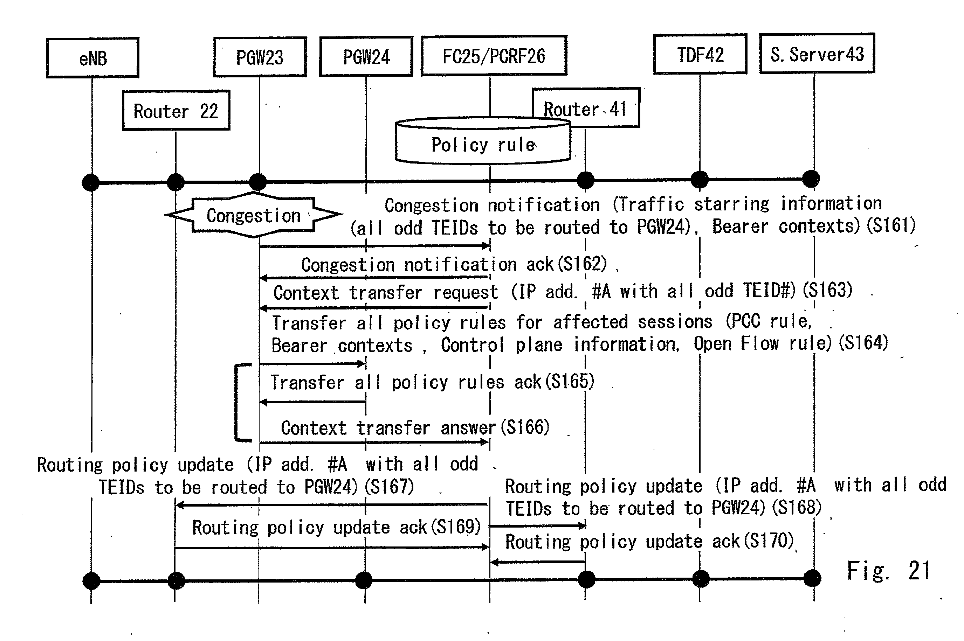

Next, a flow of processing when the PCRF 26 detects a congestion in the PGW 23 that is different from the examples in Figs. 16 to 20 shall be explained using Fig. 21. As Steps S161 and S162 are similar to Steps S141 and 142 in Fig. 20, an explanation of Steps S161 and S162 shall be omitted. Further, as Steps S163 to S170 are similar to Steps S123 to S130 in Fig. 18, an explanation of Steps S163 to S170 shall be omitted.

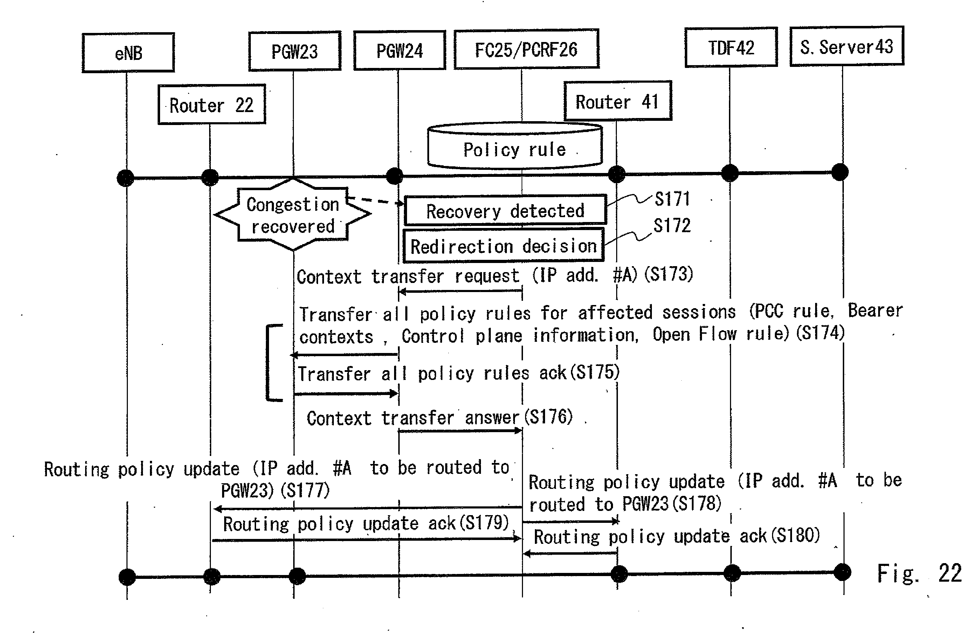

Next, a flow of processing when the PGW 23 recovers from the congested state shall be explained using Fig. 22. Firstly, the PCRF 26 detects the congestion in the PGW 23 has recovered (S171). For example, the PCRF 26 may detect that the congestion in the PGW 23 has recovered using the network management protocol such as the SNMP, the ICMP or the like.

Next, as the PGW 23 has recovered, the PCRF 26 starts the Redirection decision processing in order to switch a session in the PGW 24, which is the alternative apparatus, to the PGW 23 (S172). Next, the PCRF 26 transmits the "Context transfer request" to the PGW 24 in order to recover the session transitioned from the PGW 23 to the PGW 24 at the time when the congestion occurred (S173). The "Context transfer request" includes the routing policy information which will be transitioned to the PGW 23. As a target to be transitioned, the IP address #A that is associated with the odd-numbered TEID is specified.

Next, the PGW 24 notifies the PGW 23 of the Transfer all policy rules for affected sessions including the session information that corresponds to the routing policy which will be transitioned to the PGW 23 (S174).

Step S174 may be executed for each UE that has a bearer established with the PGW 23 or may be executed for plurality of UE using a bulk message in order to collectively transmit the policy information of the plurality of UEs. By using the bulk message, it is possible to reduce the switching time, the amount of processing, and the processing load as compared to the case in which a message is transmitted to each UE.

Next, the PGW 23 transmits a "Transfer all policy rules ack" to the PGW 24 as a response signal (S175). Further, the PGW 24 transmits the "Context transfer answer" to the FC 25 as a response signal to the "Context transfer request" (S176).

Next, the FC 25 transmits the "Routing policy update" to the Router 22 (S177). When the Router 22 receives the "Routing policy update", the Router 22 updates the routing table so that the user data, to which the destination IP address #A associated with the odd-number TEID is set, is routed to the PGW 23.
Similarly, the FC 25 transmits the "Routing policy update" to the Router 41 (S178).

Next, the Router 22 transmits the Routing policy update ack to the FC 25 (S179), and the Router transmits the Routing policy update ack to the FC 25 (S180).

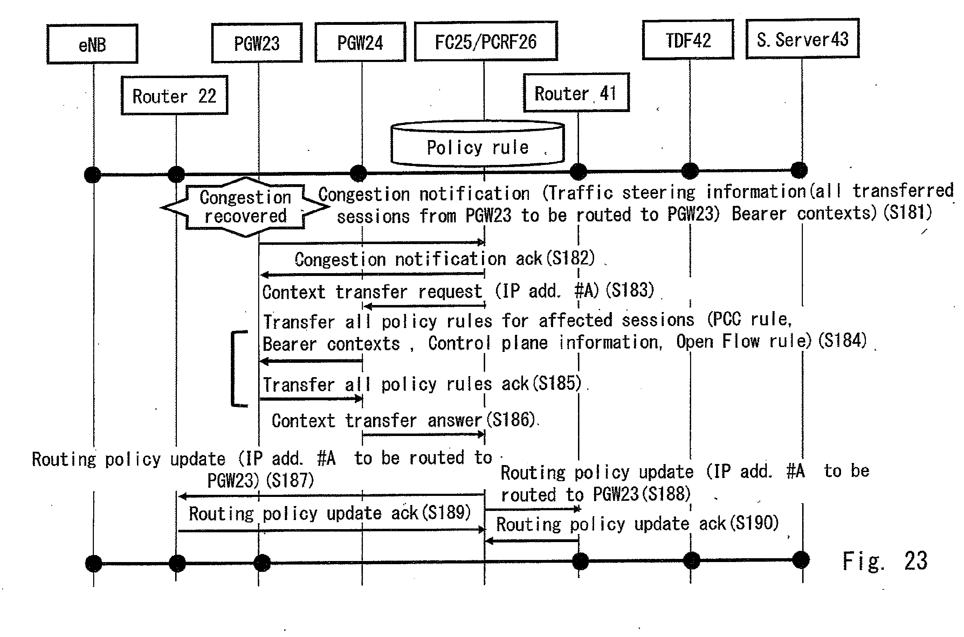

Next, a flow of processing when the PGW 23 recovers from the congested state that is different from the example in Fig. 22 shall be explained using Fig. 23. Firstly, when the PGW 23 recovers from the congested state, the PGW 23 transmits the "Congestion notification" to the PCRF 26 in order to notify the PCRF 26 of a congestion recovery (S181). The "Congestion notification" includes the routing policy information which will be transitioned from the PGW 24 to the PGW 23, and the PGW 23 prompts the PCRF 26 to transition a part or all of the sessions. Next, the PCRF 26 transmits the "Congestion notification ack" to the PGW 23 as a response signal to the "Congestion notification" (S182).

Next, the PCRF 26 notifies the PGW 24, which is the alternative apparatus, of the routing policy which will be transitioned to the PGW 23 and transmits the "Context transfer request" in order to prompt the transition of a part or all of sessions (S183). The destination IP address #A is specified as a target which will be transitioned.

Next, the PGW 24 transmits the "Transfer all policy rules for affected sessions" to the PGW 23 in order to notify the PGW 23 of the session information (the PCC rule, the bearer information, the control signal information, the Open Flow rule and the like) that corresponds to the routing policy information which will be transitioned (S184).

Next, the PGW 23 transmits the "Transfer policy rules ack" to the PGW 24 as a response signal (S185). Further, the PGW 24 transmits the "Context transfer answer" to the PCRF 26 as a response signal to the "Context transfer request" (S186).

Steps S184 and S185 may be executed for each UE that has a bearer established with the PGW 23 or may be executed for plurality of UE using a bulk message in order to collectively transmit the policy information of the plurality of UEs. By using the bulk message, it is possible to reduce the switching time, the amount of processing, and the processing load as compared to the case in which a message is transmitted to each UE.

As Steps S187 to S190 are similar to Steps S177 to S180 in Fig. 22, an explanation of Steps S187 to S190 shall be omitted.

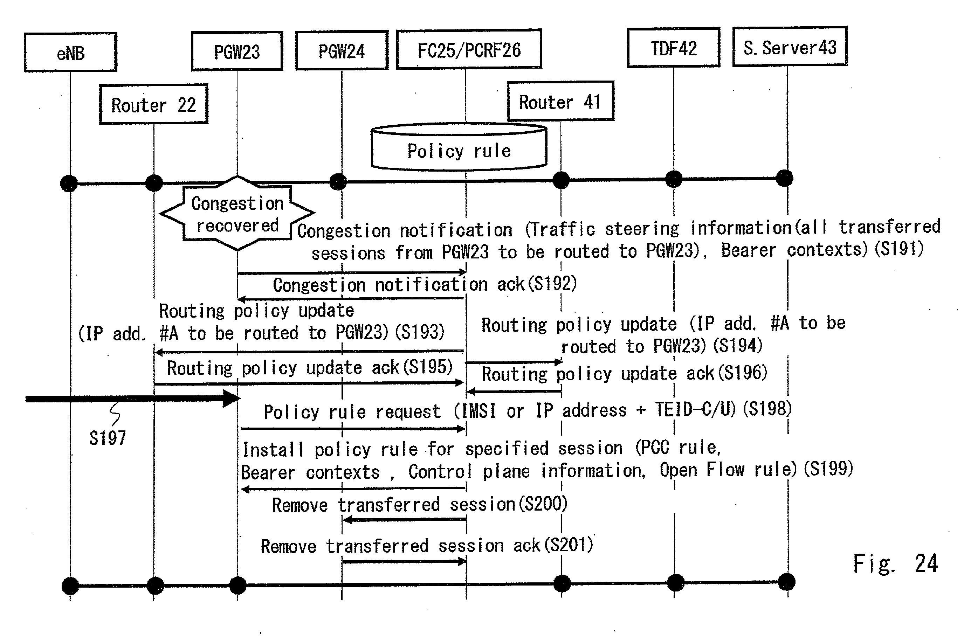

Next, a flow of processing when the PGW 23 recovers from the congested state that is different from the examples in Figs. 22 and 23 shall be explained using Fig. 24. As Steps S191 and S192 for detecting a congestion recovery of the PGW 23 are similar to Steps S181 and S182 in Fig. 23, an explanation of Steps S191 and S192 shall be omitted. Further, as Steps S193 to S196 for changing the routing policy of the Routers 22 and 41 are similar to Steps S177 to S180 in Fig. 22, an explanation of Steps S193 to S196 shall be omitted.

Next, after the Router 22 updates the routing table so that part of the data addressed to the PGW 24 is routed to the PGW 23 until Step S196, the PGW 23 receives the user data to which the IP address #A is set as the destination IP address from the Router 22 (S197).

Next, the PGW 23 transmits the "Policy rule request" to the PCRF 26 in order to receive the policy information corresponding to the received user data (S198). The "Policy rule request" includes the IMSI or the IP address regarding the flow received by the PGW 23 and the TEID or TEID-C. Next, the PCRF 26 transmits an "Install policy rule for specified session" to the PGW 23 in order to notify the PGW 23 of the PCC rule, the bearer information, the C-Plane control signal information and the like regarding the flow received by the PGW 23 (S199).

Next, the PCRF 26 transmits the "Remove transferred session" to the PGW 24 in order to delete a session that becomes unnecessary in the PGW 24 when the PGW 23 recovers (S200). After the PGW 24 deletes the unnecessary session, the PGW 24 transmits the "Remove transferred session ack" to the PCRF 26 (S201).

### (Third exemplary embodiment)

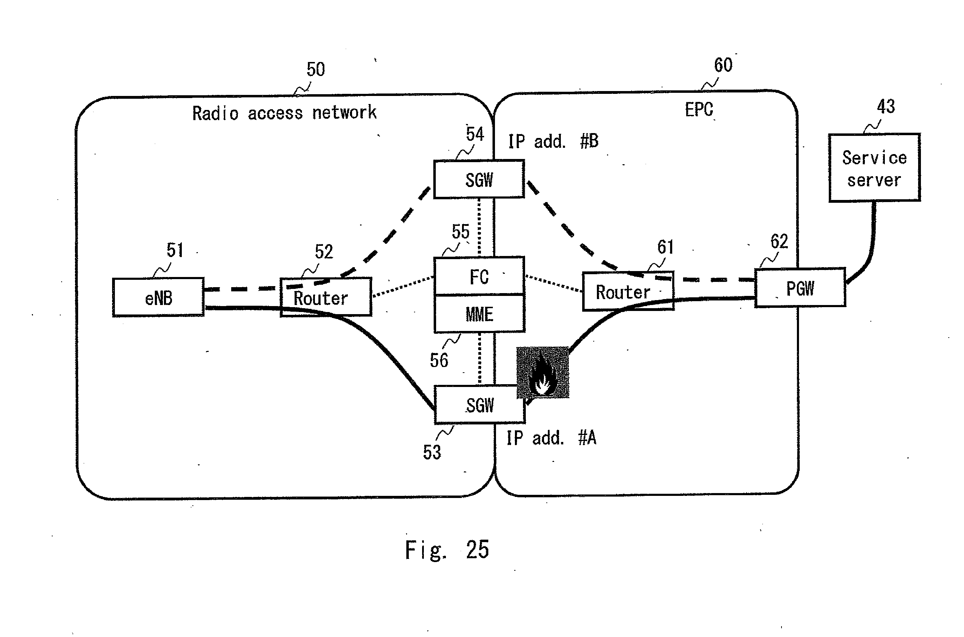

Next, a failure that occurred in a communication system according to a third exemplary embodiment shall be explained using Fig. 25. Fig. 25 shows a configuration in which communication is performed using a RAN (Radio Access Network) 50 and an EPC 60.

The RAN 50 includes an eNB 51, a Router 52, SGWs 53 and 54, an FC 55, and an MME 56. The EPC 60 includes a Router 61 and a PGW 62. The PGW 62 is connected to the Service server 43 of the External network 40.

The eNB 51 is a base station that communicates with a communication terminal using the LTE scheme that is specified by 3GPP as a wireless scheme. The eNB 51 transmits the user traffic transmitted from the UE to the SGW 53 or 54 via the Router 52. The IP address #A that is allocated to the SGW 53 or the IP address #B that is allocated to the SGW 54 is set to the user traffic as a destination address. The Router 52 uses the routing table that associates the destination address with a transfer destination apparatus to transfer the user traffic transmitted from the eNB 51 to the SGW 53 or 54. In this drawing, the user traffic before a failure occurs in the SGW 53 indicates that the user traffic is transferred to the SGW 53.

The Router 61 transmits the data transmitted from the SGW 53 or 54 to the Service server 43 via the PGW 62. Alternatively, the Router 61 transmits the data transmitted from the Service server 43 to the SGW 53 or 54 via the PGW 62.

The MME 56 performs mobility management, session management, and service management on the communication terminal that performs communication using the LTE scheme that is specified by 3GPP as a wireless scheme.

As the FC 55 has the functions similar to those of the FC 25 according to the first exemplary embodiment, a detailed explanation of the FC 55 shall be omitted. Further, as the SGWs and 53 and 54 have the functions similar to those of SGW 21 according to the first exemplary embodiment, a detailed explanation of the SGWs 53 and 54 shall be omitted. Furthermore, as the PGW 62 has the functions similar to those of PGW 23 or 24 of the first exemplary embodiment, a detailed explanation of the PGW 62 shall be omitted.

This drawing illustrates that, when a failure occurs in the SGW 53, the Router 52 changes data addressed to the SGW 53 so that it is routed to the SGW 54.

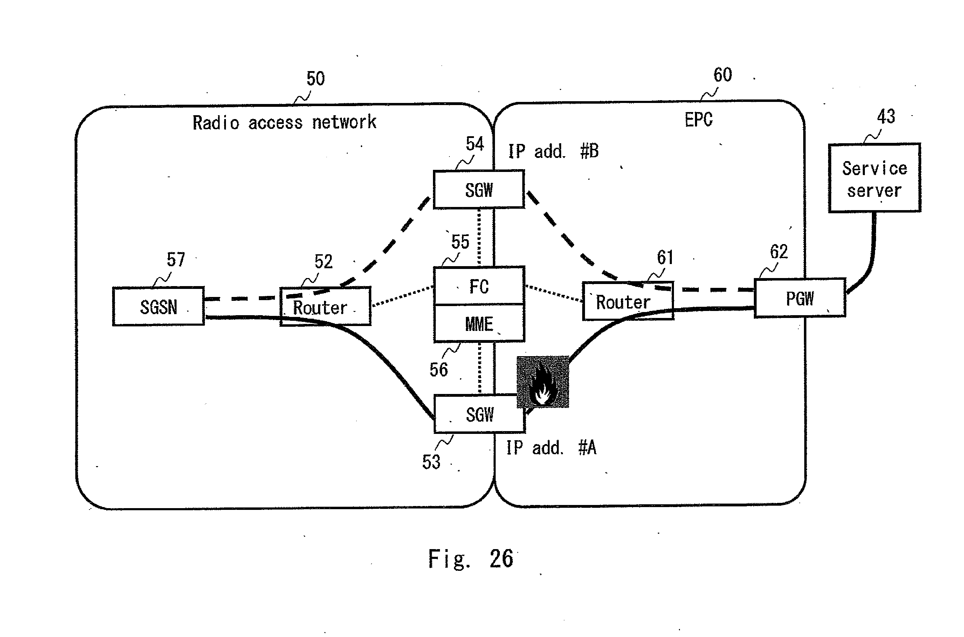

Next, a failure that occurred in the communication system that is different from the case in Figs. 25 shall be explained using Fig. 26. In this drawing, an SGSN 57 is used in place of the eNB 51 of Fig. 25. The remainder of configuration is the same as the configuration shown in Fig. 25. This drawing also shows that when a failure occurs in the SGW 53, the Router 52 changes the data addressed to the SGW 53 so that it is routed to the SGW 54.

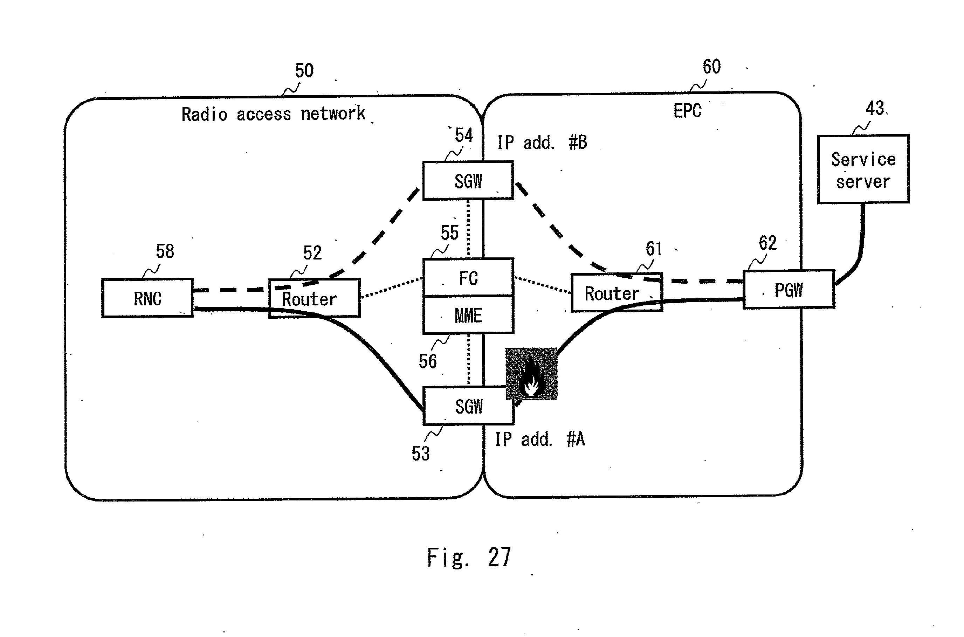

Next, a failure that occurred in the communication system that is different from the cases in Figs. 25 and 26 shall be explained using Fig. 27. In this drawing, an RNC 58 is used in place of the eNB 51 of Fig. 25. The remainder of configuration is the same as the configuration shown in Fig. 25. This drawing also shows that when a failure occurs in the SGW 53, the Router 52 changes the data addressed to the SGW 53 so that it is routed to the SGW 54. By using a BSC (Base Station Controller) in place of the RNC 58, the present invention can be applied to a so-called 2G system.

The routing table used by the Router 52 in Figs. 25 to 27 is basically the same as the routing table in Fig. 3, except that in this drawing, SGWs are used in place of the PGWs in Fig. 3.

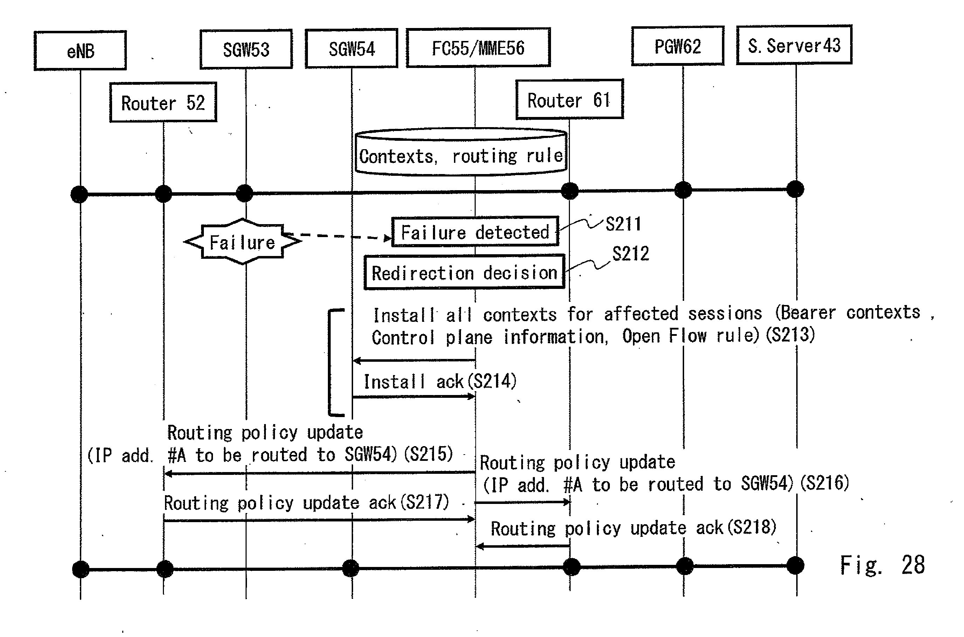

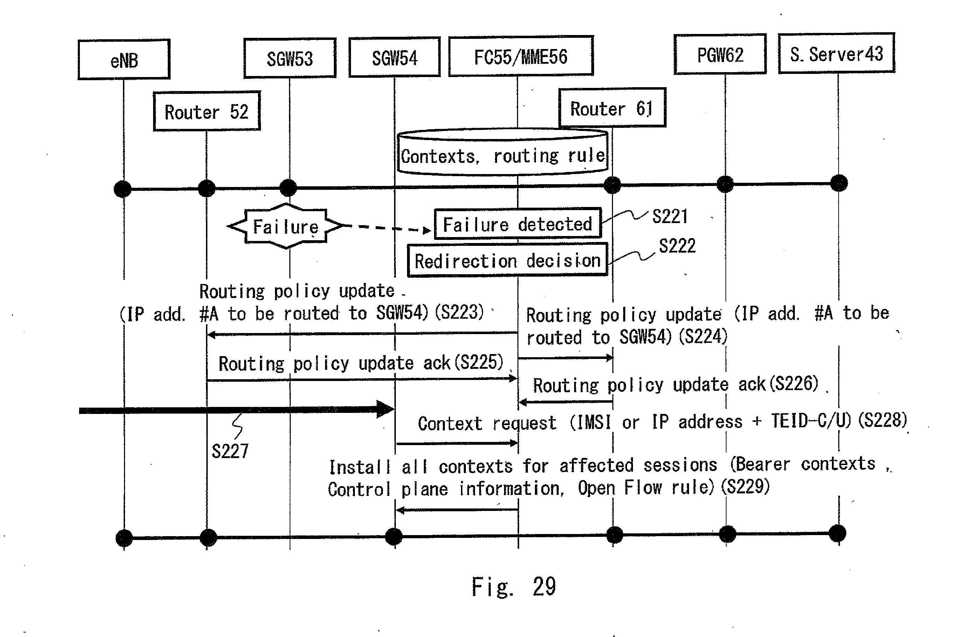

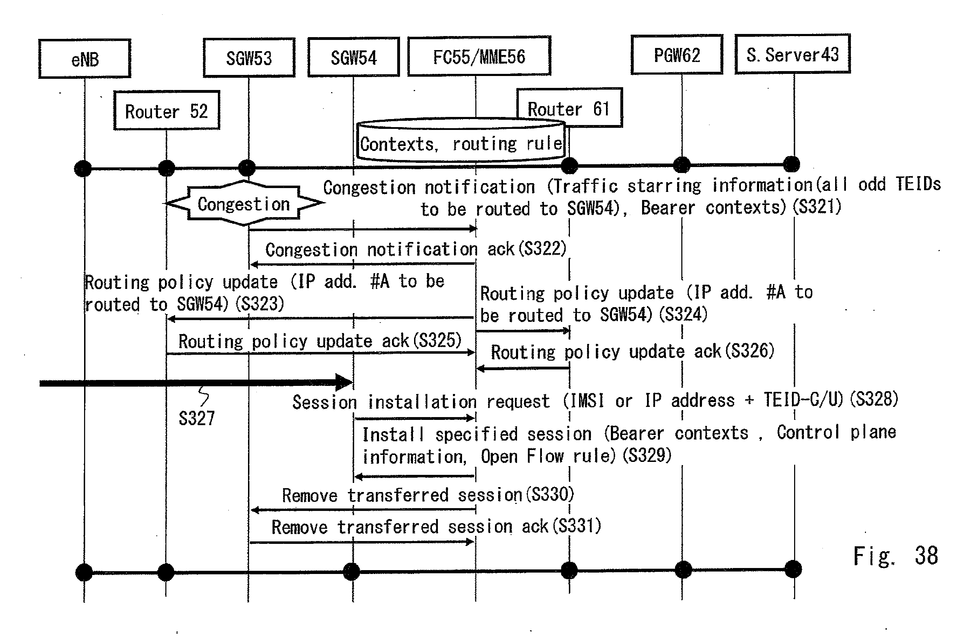

Next, a flow of processing when the MME 56 detects a failure in the SGW 23 shall be explained using Figs. 28 and 29. Processing in Fig. 28 is similar to the processing in Fig. 9, but in Fig.28, the PGWs in Fig. 9 are replaced by the SGWs. Differences from Fig. 9 are, in Fig. 38, in Step S213, the MME 56 transmits "Install all contexts for affected sessions" to the SGW 54, which is the alternative apparatus, and in Step S214, the SGW 54 transmits "Install ack" to the MME 56. The "Install all contexts for affected sessions" includes the bearer information, the control signal information, the Open Flow rule and the like. The rest of the processing in Fig. 28 is similar to the processing in Fig. 9.

Further, processing in Fig. 29 is similar to the processing in Fig. 10, but in Fig. 29, the PGWs in Fig. 10 are replaced by the SGWs. Differences from Fig. 10 are, in Fig. 29, the SGW 54, which is the alternative apparatus, transmits the "Context request" to the MME 56, and in Step S229, the MME 56 transmits the "Install all contexts for affected sessions" to the SGW 54, which is the alternative apparatus. The "Install all contexts for affected sessions" includes the bearer information, the control signal information, the Open Flow rule and the like. Other processing in Fig. 29 is similar to the processing in Fig. 10.

In a manner similar to Figs. 9 and 10, Figs. 28 and 29 show the setting processing of the policy to the SGW 54, which is the alternative apparatus, and the change processing of the routing policy in the SGW 54, which is the alternative apparatus in the Router 52. As the processing is the same as the processing in Figs. 9 and 10, a detailed explanation of the above-mentioned processing shall be omitted.

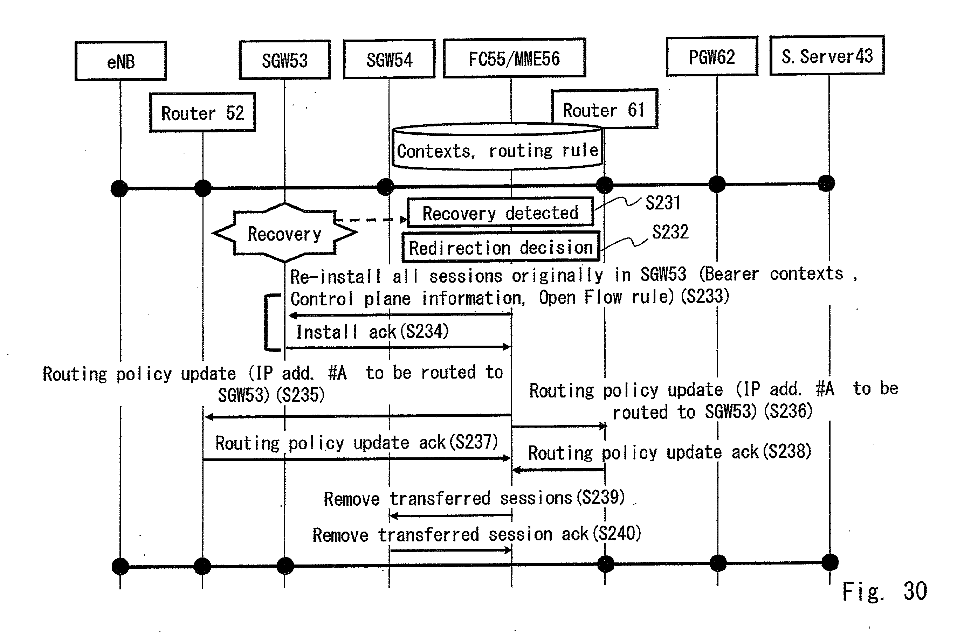

Next, a flow of processing by the MME 56 when a failure in the SGW 53 recovers shall be explained using Figs. 30 to 32. Processing in Fig. 30 is similar to the processing in Fig. 11, but in Fig. 30, the PGWs in Fig. 11 are replaced by the SGWs. Differences from Fig. 11 are, in Fig. 30, in Step S233, the MME 56 transmits a "Re-install all sessions originally in SGW53" to the SGW 53, which is an apparatus recovered from the failure, and in Step S234, the SGW 54 transmits the "Install ack" to the MME 56. The "Re-install all sessions originally in SGW23" includes the bearer information, the control signal information, the Open Flow rule and the like. Other processing in Fig. 30 is similar to the processing in Fig. 11.

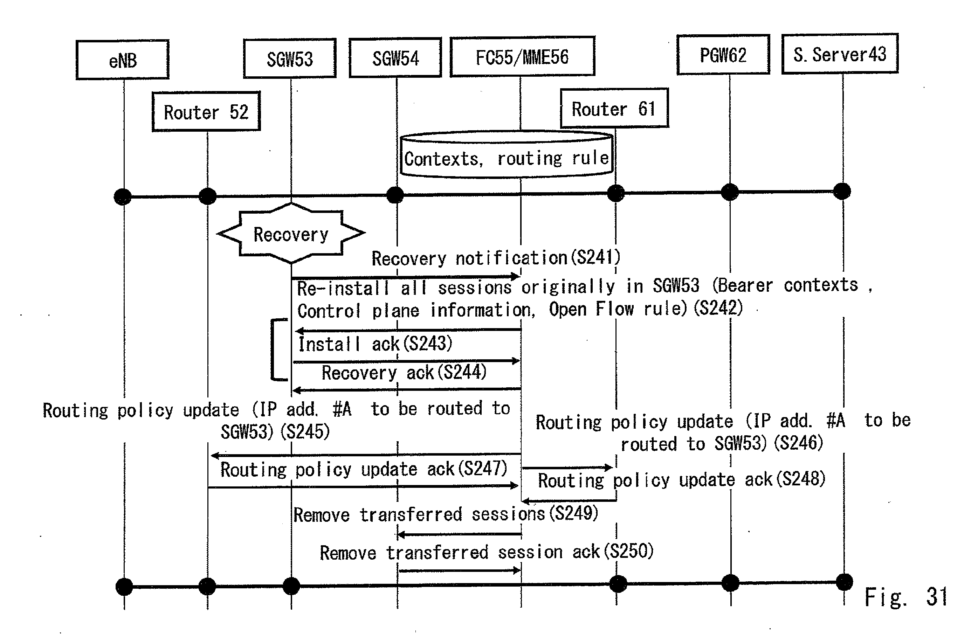

Processing in Fig. 31 is similar to the processing in Fig. 12, but in Fig. 31, the PGWs in Fig. 12 are replaced by the SGWs. Differences from Fig. 12 that, in Fig. 31, in Step S242, the MME 56 transmits the "Re-install all sessions originally in SGW53" to the SGW 53, which is an apparatus recovered from the failure, and in Step S243, the SGW 54 transmits the "Install ack" to the MME 56. Other processing in Fig. 31 is similar to the processing in Fig. 12.

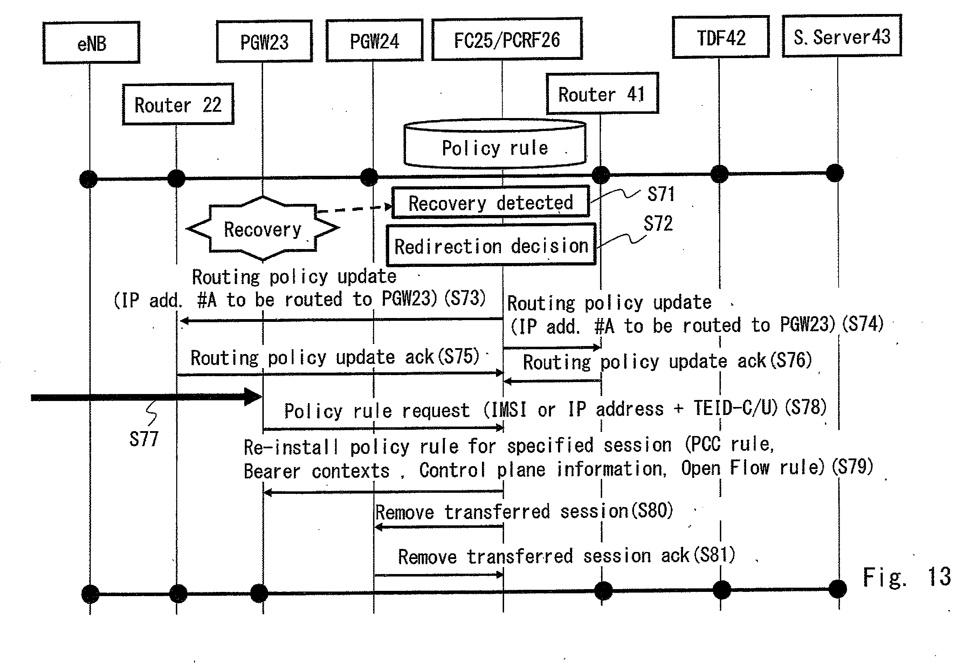

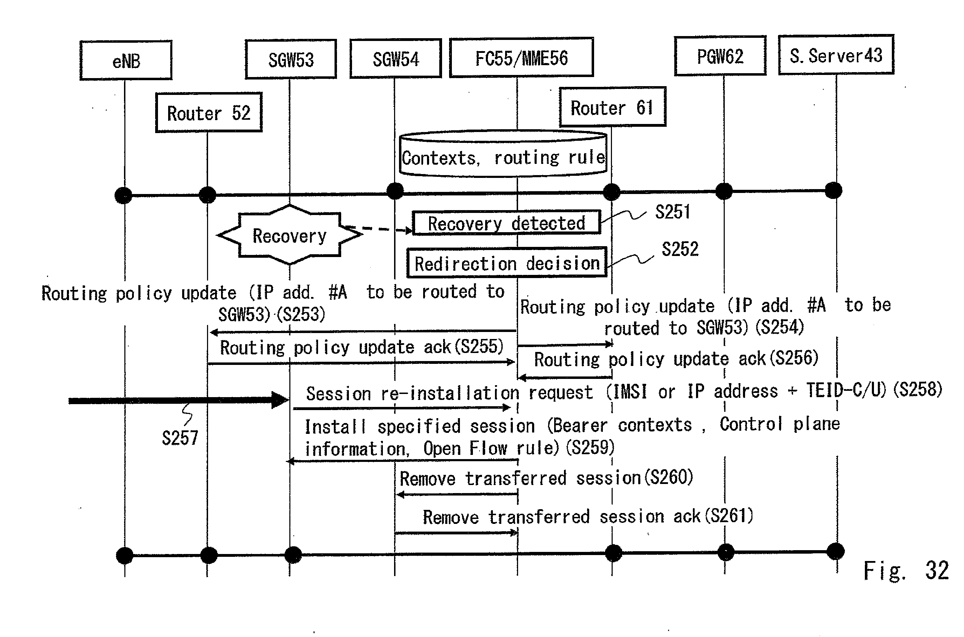

Processing in Fig. 32 is similar to the processing in Fig. 13, but in Fig. 32, the PGWs in Fig. 13 are replaced by the SGWs. Differences from Fig. 13 are, in Fig. 32, in Step S258, the SGW 53 transmits a "Session re-installation request" to the MME 56, which is an apparatus recovered from the failure, and in Step S259, the MME 56 transmits the "Install specified session" to the SGW 53. The "Install specified session" includes the bearer information, the control signal information, the Open Flow rule and the like. Other processing in Fig. 32 is similar to the processing in Fig. 13.

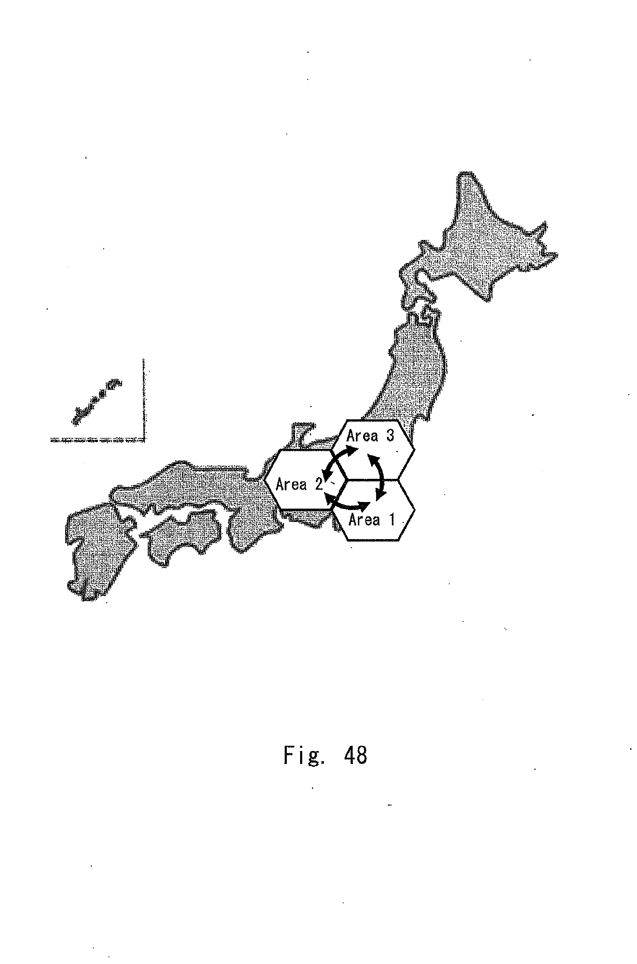

Next, enhancement of an EPC network geographically or by the unit of network topology shall be explained using Fig. 48. Normally, the SGW is disposed geographically or by the unit of network topology. In this drawing, areas A, B, and C that indicate geographical locations or network topologies use the OpenFlow technology to enable switching from one another. This drawing illustrates that by using the OpenFlow technology, it is possible to enhance the network against geographical disasters such as earthquake, tsunami, typhoon and the like.

### (Fourth exemplary embodiment)

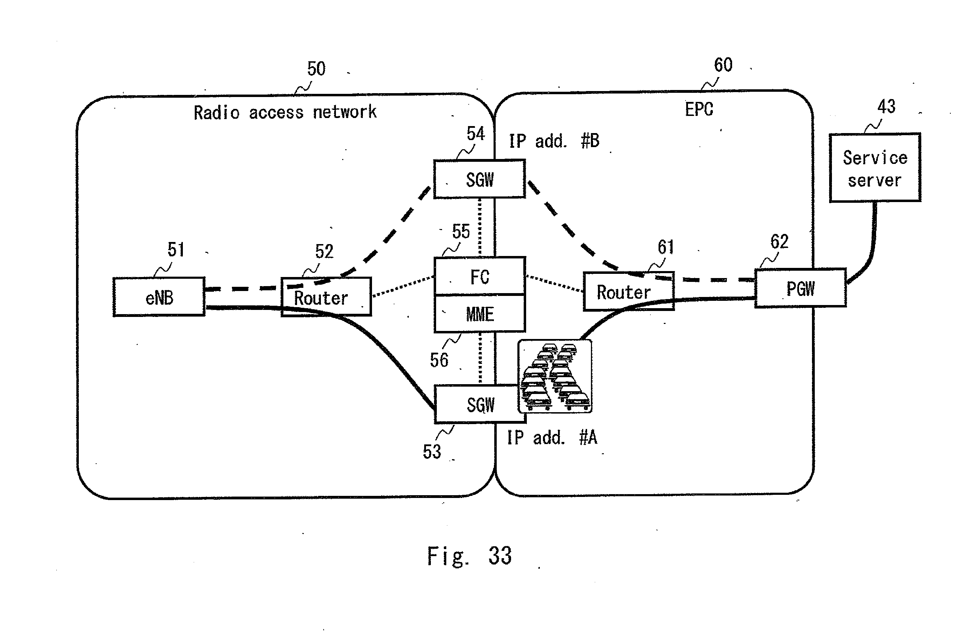

Next, a congestion that occurred in the communication system shall be explained using Fig. 33. Fig. 333 shows a configuration similar to the configuration in Fig. 25 and shows a congestion that occurred in the SGW 53.

The routing table used by the Router 52 in Fig. 33 is basically the same as the routing table in Fig. 15, and in Fig. 33, the SGWs are used in place of the PGW in Fig. 15.

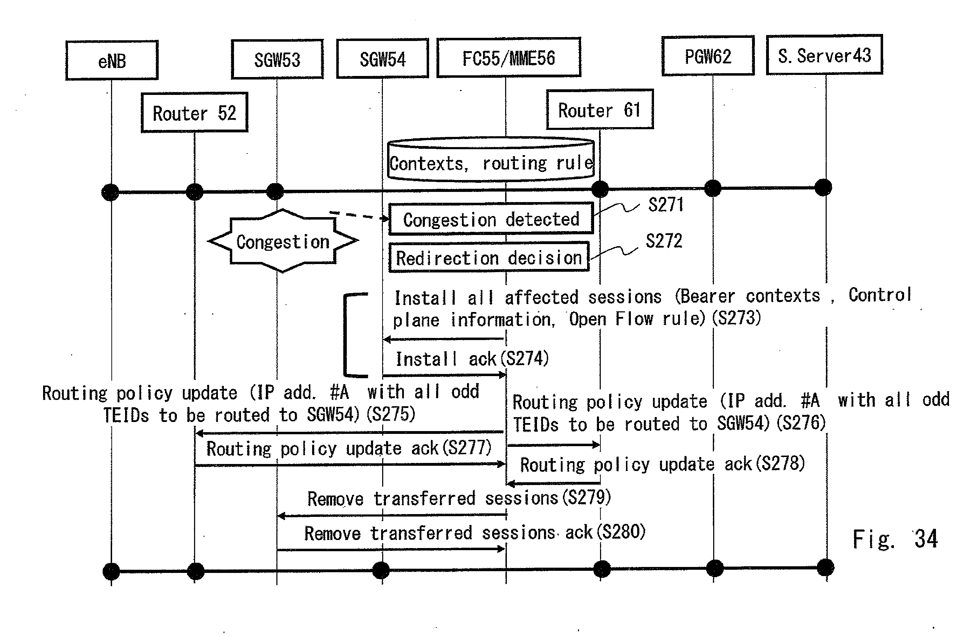

Next, a flow of processing when the SGW 53 recovers from the congested state shall be explained using Figs. 34 to 39.

Processing in Fig. 34 is similar to the processing in Fig. 16, but in Fig. 34, the PGWs in Fig. 16 are replaced by the SGWs. Differences from Fig. 16 are, in Fig. 34, in Step S273, the MME 56 transmits the "Install specified session" to the SGW 54, which is the alternative apparatus, and in Step S274, the SGW 54 transmits the "Install ack" to the MME 56. The "Install all affected sessions" includes the bearer information, the control signal information, the Open Flow rule and the like. Other processing in Fig. 34 is similar to the processing in Fig. 16.

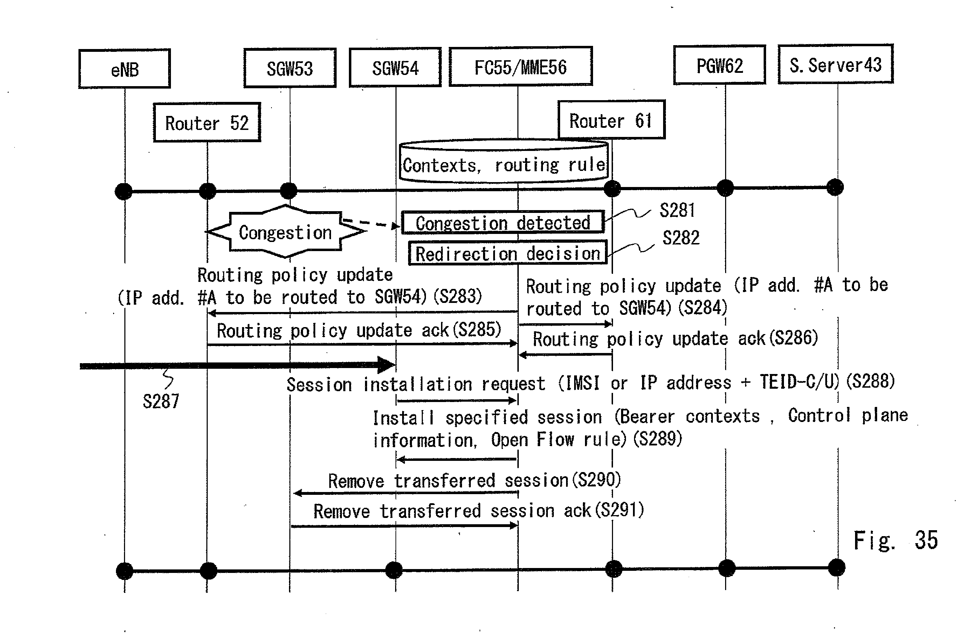

Processing in Fig. 35 is similar to the processing in Fig. 17, but in Fig. 35, the PGWs in Fig. 17 are replaced by the SGWs. Differences from Fig. 17 are, in Fig. 35, in Step S288, the SGW 54, which is the alternative apparatus, transmits a "Session installation request" to the MME 56, and in Step S289, the FC 55 transmits the "Install specified session" to the SGW 54. Other processing in Fig. 35 is similar to the processing in Fig. 17.

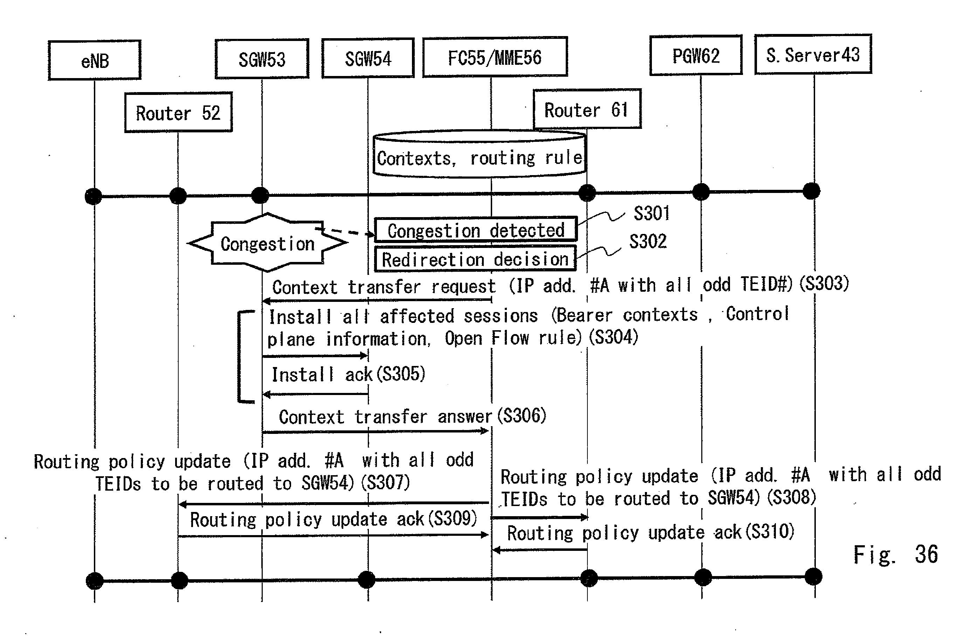

Processing in Fig. 36 is similar to the processing in Fig. 18, but in Fig. 36, the PGWs in Fig. 18 are replaced by the SGWs. Differences from Fig. 18 are, in Fig. 36, in Step S304, the SGW 53, which is a congested apparatus, transmits the "Install all affected sessions" to the MME 56, and in Step S305, the MME 56 transmits the "Install ack" to the SGW 53. Other processing in Fig. 36 is similar to the processing in Fig. 18.

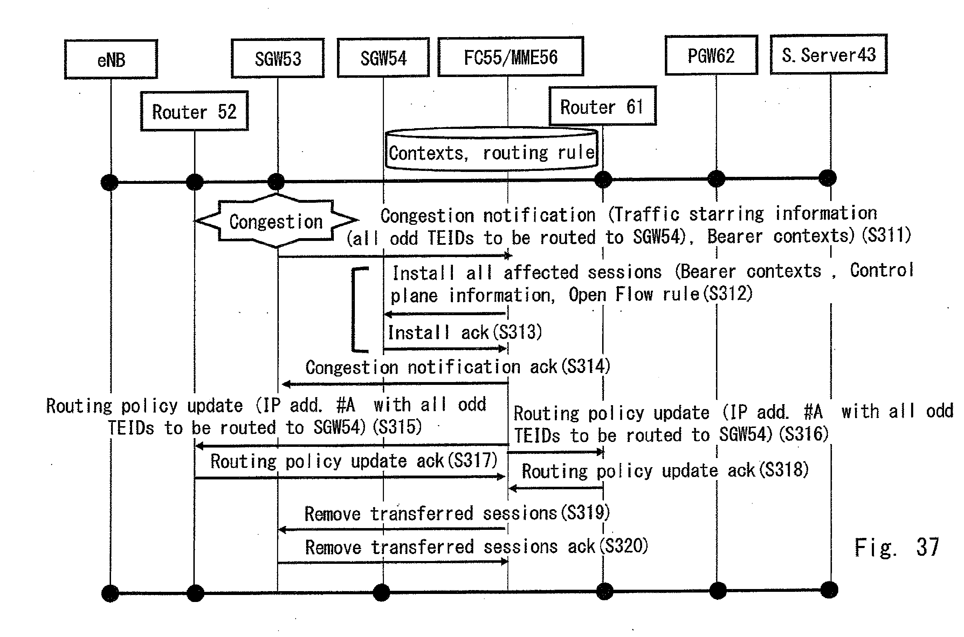

Processing in Fig. 37 is similar to the processing in Fig. 19, but in Fig. 37, the PGWs in Fig. 19 are replaced by the SGWs. Differences from Fig. 19 are, in Fig. 37, in Step S312, the MME 56 transmits the "Install all affected sessions" to the SGW 54, which is the alternative apparatus, and in Step S313, the SGW 54 transmits the "Install ack" to the MME 56. Other processing in Fig. 37 is similar to the processing in Fig. 19.

Processing in Fig. 38 is similar to the processing in Fig. 20, but in Fig. 38, the PGWs in Fig. 20 are replaced by the SGWs. Differences from Fig. 20 are, in Fig. 38, in Step S328, the SGW 54, which is the alternative apparatus, transmits the "Session install request" to the MME 56, and in Step S329, the MME 56 transmits the "Install specified session" to the SGW 54. Other processing in Fig. 38 is similar to the processing in Fig. 20.

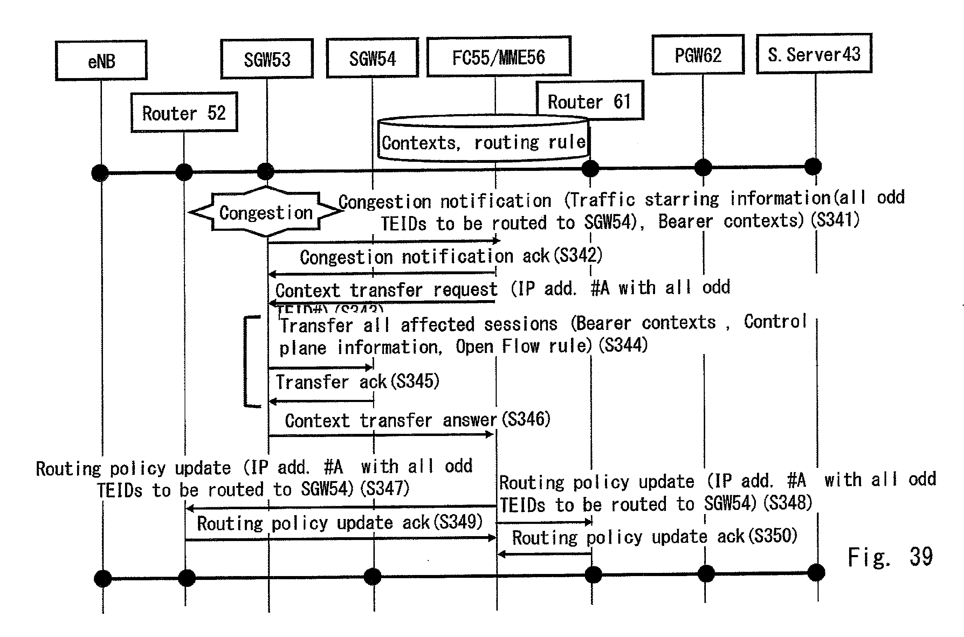

Processing in Fig. 39 is similar to the processing in Fig. 21, but in Fig. 39, the PGWs in Fig. 21 are replaced by the SGWs. Differences from Fig. 21 are, in Fig. 39, in Step S344, the SGW 53 transmits a "Transfer all affected sessions" to the SGW 54, which is the alternative apparatus, and in Step S345, the SGW 54 transmits a "Transfer ack" to the SGW 53. Other processing in Fig. 39 is similar to the processing in Fig. 21.

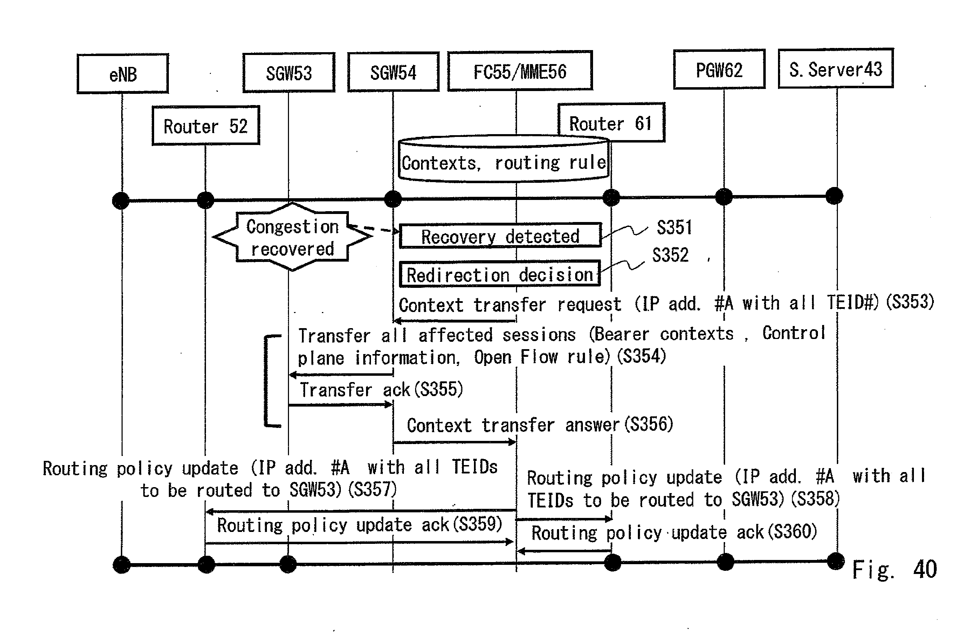

Processing in Fig. 40 is similar to the processing in Fig. 22, but in Fig. 40, the PGWs in Fig. 22 are replaced by the SGWs. Differences from Fig. 22 are, in Fig. 40, in Step S354, the SGW 54, which is the alternative apparatus, transmits the "Transfer all affected sessions" to the SGW 53, which returned from the congested state, and in Step S355, the SGW 53 transmits the "Transfer ack" to the SGW 54. Other processing in Fig. 40 is similar to the processing in Fig. 22.

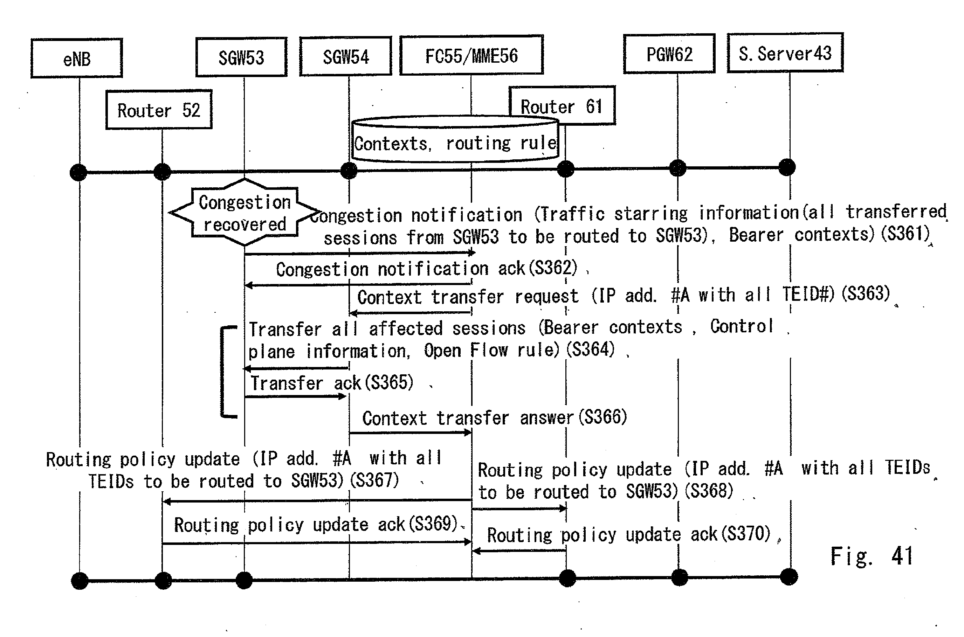

Processing in Fig. 41 is similar to the processing in Fig. 23, but in Fig. 41, the PGWs in Fig. 23 are replaced by the SGWs. Differences from Fig. 23 are, in Fig. 41, in Step S364, the SGW 54, which is the alternative apparatus, transmits the "Transfer all affected sessions" to the SGW 53, which returned from the congested state, and in Step S365, the SGW 53 transmits the "Transfer ack" to the SGW 54. Other processing in Fig. 41 is similar to the processing in Fig. 23.

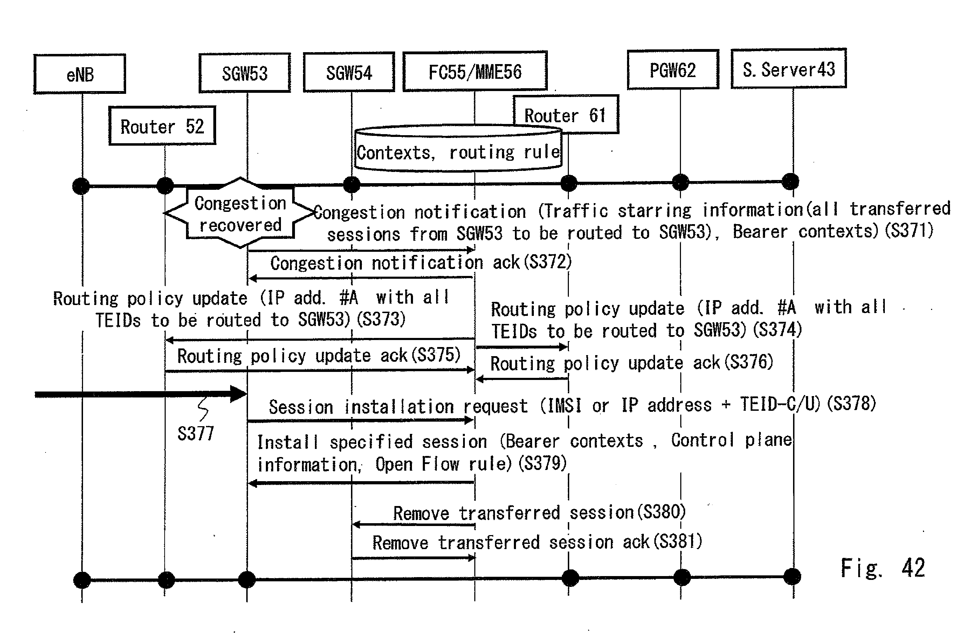

Processing in Fig. 42 is similar to the processing in Fig. 24, but in Fig. 42, the PGWs in Fig. 24 are replaced by the SGWs. Differences from Fig. 24 are, in Fig. 42, in Step S378, the SGW 53, which returned from the congested state, transmits the "Session installation request" to the MME 56, and in Step S379, the FC 55 transmits the "Install specified session" to the SGW 53. Other processing in Fig. 42 is similar to the processing in Fig. 24.

Note that the present invention is not limited to the above exemplary embodiments, and modifications can be made without departing from the scope as appropriate.

Although the present invention has been explained with reference to the exemplary embodiments, the present invention is not limited by the above. Various modifications, obvious to those skilled in the art, can be made to the configurations and details of the present invention within the scope of the invention.

The present application claims priority rights of and is based on Japanese Patent Application No. 2012-102741 filed on April 27, 2012 in the Japanese Patent Office, the entire contents of which are hereby incorporated by reference.

### Reference Signs List

- 11: DATA TRANSFER APPARATUS
- 12: GATEWAY
- 13: GATEWAY
- 14: PATH CONTROL APPARATUS
- 20: EPS
- 21: SGW
- 22: ROUTER
- 23: PGW
- 24: PGW
- 25: FC
- 26: PCRF
- 27: GGSN
- 28: GGSN
- 29: SGSN
- 30: RNC
- 31: NON 3GPP ACCESS
- 40: EXTERNAL NETWORK
- 41: ROUTER
- 42: TDF
- 43: SERVICE SERVER
- 50: RAN
- 51: eNB
- 52: ROUTER
- 53: SGW
- 54: SGW
- 55: FC
- 56: MME
- 57: SGSN
- 58: RNC
- 60: EPC
- 61: ROUTER
- 62: PGW

## Claims

1. A communication system comprising:
a data transfer apparatus;
a first gateway for communicating with the data transfer apparatus;
a second gateway that is an apparatus which is an alternative to the first gateway; and
path control means for controlling communication paths between the data transfer apparatus and the first and second gateways, wherein
when the path control means detects a failure condition in the first gateway, the path control means transfers data transferred from the data transfer apparatus to the first gateway to the second gateway and notifies the second gateway of session information that is set to the first gateway.

2. The communication system according to Claim 1, wherein
the failure condition includes at least one of a failure and a congestion in the first gateway and a path failure between the data transfer apparatus and the first gateway.

3. The communication system according to Claim 1 or 2, wherein
the session information includes bear information.

4. The communication system according to any one of Claim 1 to 3, wherein
the data transfer apparatus includes a routing table for associating first address information with the first gateway, the first address information being allocated to the first gateway, and
when the path control means detects the failure condition in the first gateway, the path control means updates the routing table so that the first address information is associated with the second gateway.

5. The communication system according to Claim 4, wherein
when the path control means detects a recovery of the first gateway that has been in the failure condition, the path control means updates the routing table so that the first address information is associated with the first gateway.

6. The communication system according to any one of Claims 1 to 5, wherein
when a congestion occurs in the first gateway, the path control means notifies the second gateway of the session information that is set to the first gateway based on a congestion notification transmitted from the first gateway.

7. The communication system according to any one of Claims 1 to 6, wherein
the data transfer apparatus includes the routing table for associating the first address information allocated to the first gateway and a plurality of pieces of tunnel identification information with the first gateway, and
when the path control means detects the congestion in the first gateway, the path control means updates the routing table so that the first address information that is associated with a part of the plurality of tunnel identifiers is associated with the second gateway.

8. The communication system according to Claim 7, wherein
when the path control means detects the congestion in the first gateway, the path control means transmits a session information transfer notification for notifying the second gateway of session information regarding the first address information that is associated with the part of the plurality of tunnel identifiers to the first gateway, and
when the first gateway receives the session information transfer notification, the first gateway transmits the session information regarding the first address information that is associated with the part of the plurality of tunnel identifiers to the second gateway.

9. The communication system according to any one of Claims 1 to 8, wherein
the first and second gateways are PGWs or GGSNs that are specified in a 3GPP technical specification.

10. The communication system according to Claim 9, wherein
the path control means operates in cooperation with a PCRF that is specified in the 3GPP technical specification.

11. The communication system according to any one of Claims 1 to 8, wherein
the first and second gateways are SGWs that are specified in the 3GPP technical specification.

12. The communication system according to Claim 11, wherein
the path control means operates in cooperation with an MME that is specified in the 3GPP technical specification.

13. A method for path control comprising
detecting a failure condition in a first gateway, the first gateway communicating with a data transfer apparatus; and
transferring data to be transferred from the data transfer apparatus to the first gateway to a second gateway, and notifying the second gateway of session information, the second gateway being an apparatus which is an alternative to the first gateway, and the session information being set to the first gateway.

14. The method according to Claim 13, wherein
the failure condition includes at least one of a failure and a congestion in the first gateway and a path failure between the data transfer apparatus and the first gateway.

15. The method according to Claim 13 or 14, wherein
the session information includes bearer information.

16. The method according to any one of Claims 13 to 15, further comprising:
detecting the failure condition;
performing control so that the data transferred from the data transfer apparatus to the first gateway is transferred to the second gateway, the second gateway being the apparatus which is the alternative to the first gateway;
receiving a session information retrieval request when the data is transferred to the second gateway, the session information retrieval request being transmitted from the second gateway; and
transmitting the session information to the second gateway based on the session information retrieval request.

17. The method according to any one of Claims 13 to 16, wherein
when a congestion occurs in the first gateway, the second gateway is notified of the session information that is set to the first gateway based on a congestion notification transmitted from the first gateway.

18. The method according to any one of Claims 13 to 17, wherein
the data transfer apparatus includes a routing table for associating first address information that is allocated to the first gateway and a plurality of pieces of tunnel identification information with the first gateway, and
when the congestion in the first gateway is detected, the routing table is updated so that the first address information that is associated with a part of the plurality of tunnel identifiers is associated with the second gateway.

19. The method according to Claim 18, wherein
when the congestion in the first gateway is detected, a session information transfer notification for notifying the second gateway of the session information regarding the first address information associated with the part of the plurality of tunnel identifiers is transmitted to the first gateway.
